# EUROPÄISCHE PATENTSCHRIFT

(11) **EP 1 239 262 B1**
(45) Veröffentlichungstag und Bekanntmachung des Hinweises auf die Patenterteilung: **10.05.2006**
(21) Anmeldenummer: 02004087.9
(22) Anmeldetag: 25.02.2002
(51) Int. Cl.: G01B 11/27, G01C 15/00, G02B 27/10

(54) **Anordnung und Verfahren zum Erzeugen mehrerer zueinander definiert ausgerichteter optischer Achsen**
Arrangement and method for producing a plurality of optical axes with a defined alignment with respect to each other
Dispositif et procédé pour la production d'une pluralité d'axes optiques avec un alignement défini les uns par rapport aux autres

(30) Priorität: 09.03.2001 DE 10112024
(43) Veröffentlichungstag der Anmeldung: 11.09.2002
(73) Patentinhaber: HILTI Aktiengesellschaft, 9494 Schaan (LI)
(72) Erfinder: Schaller, Uwe, 07768 Kahla (DE)
(74) Vertreter: Freitag, Joachim

(56) Entgegenhaltungen:
- EP-A- 0 916 984
- EP-A- 1 067 422
- DE-A- 4 130 977
- PATENT ABSTRACTS OF JAPAN vol. 1996, no. 04, 30. April 1996 (1996-04-30) & JP 07 333528 A (NIPPON TELEGR & TELEPH CORP), 22. Dezember 1995 (1995-12-22)

## Beschreibung

Die Erfindung betrifft eine Anordnung sowie ein Verfahren zum Erzeugen mehrerer zueinander definiert ausgerichteter optischer Achsen, bei der die Richtungen der optischen Achsen durch die Reflexionswinkel eines Lichtbündels an unterschiedlich angeordneten ebenen Spiegelflächen definiert sind. Sie ist insbesondere zur Herstellung von Laserloten mit mehreren orthogonalen Achsen und ähnlichen Messgeräten für die Bauindustrie geeignet, bietet jedoch auch vielfältige Anwendungsmöglichkeiten bei der Justierung von beliebig aufzuteilenden Strahlengängen in optischen Präzisionsmessgeräten.

lm Stand der Technik sind allgemein für Spiegeljustierungen Tisch- und Rahmensysteme bekannt, die als Träger für Spiegelflächen mechanisch über Stellschrauben oder piezoelektrisch betätigt werden, wenn der gewünschte Strahlverlauf eines Lichtbündels erstmalig (oder bei wiederholten Nachjustierungen) unter Einschaltung der benutzten Lichtquellen auf einen Zielpunkt eingerichtet wird.
Diese Vorgehensweise ist bei Laserloten für die Bauindustrie ebenso üblich, wobei die Art der Strahlaufteilung und -ausrichtung verschiedenartig gelöst wird.
In der Patentschrift US 4,912,851 ist ein Lotrecht-Waagerecht-Indikator offenbart, bei dem mit einem Zweispiegel-Orthogonal-Reflektor (Pentaprisma) die exakte rechtwinklige Ausrichtung eines waagerechten Austrittsstrahls zur ursprünglichen vertikalen Richtung des kollimierten Laserstrahls erreicht wird. Die Vertikalrichtung wird dabei durch Ausschwenken des Reflektors aus dem Laserstrahl erzeugt. Diese Lösung hat den entscheidenden Nachteil, dass die beiden orthogonalen Austrittsstrahlen nur wahlweise zur Verfügung stehen.
Ein ähnliches tragbares Lasergerät für Ausrichtungsaufgaben ist in der Patentschrift US 5,144,487 beschrieben, das gleichzeitig (bis zu fünf) Austrittsstrahlen in Vertikal-, Horizontal- und Orthogonalrichtung bereitstellen kann, indem kollimiertes Licht einer Laserdiode durch ein optisches System in entsprechend viele Austrittsstrahlen geteilt wird. Eine aus Laserdiode, Kollimator und optischem System bestehende Projektionseinheit ist dabei pendelnd so aufgehängt, dass mindestens ein Strahl waagerecht ist und andere Strahlen senkrecht oder rechtwinklig dazu ausgerichtet sind. Das optische System beinhaltet zur Strahlteilung wenigstens einen teildurchlässigen Spiegel, der genau justiert werden muss, wobei über die Art und Weise der genauen reproduzierbaren Ausrichtung der teildurchlässigen Spiegel kleine Angaben gemacht werden, so dass von einer aufwändigen Endjustierung anhand von Zielmarken auszugehen ist.

Eine weitere Lösung zu der Problematik eines mehrachsigen Laserrichtinstruments ist aus der US 6,005,716 bekannt geworden. Hier wird bewusst die üblicherweise bei Laserdioden vorliegende elliptische Strahlform ausgenutzt, um das kollimierte elliptische Lichtbündel in drei nebeneinander liegenden kreisrunden Bündel auf drei unmittelbar nebeneinander in einer Ebene angeordnete Spiegel zu richten, die unterschiedlich in drei verschiedene Richtungen um 45° geneigt sind und von denen der mittlere teildurchlässig ist. Dadurch entstehen vier orthogonale Strahlenbündel. Ein fünfter Strahl wird durch Hinzufügung eines weiteren teildurchlässigen Spiegels im Strahlengang des am ersten teildurchlässigen Spiegel reflektierten Strahls angeordnete und reflektiert das Strahlenbündel entgegengesetzt. Nachteilig ist hierbei die unterschiedliche Intensität der orthogonalen Bündel infolge der mehrfachen Teilung einzelner Teilbündel. Außerdem bleibt auch bei dieser Lösung die Ausrichtung der einzelnen Spiegelflächen aufwändig und ist aus der Patentschrift weder in der Art der Spiegelhalterung noch in Vorgehensweise der geeigneten Justierung entnehmbar.
Weiterhin ist aus der Patentanmeldung EP-A-0 916 984 ein Bauteil zur Lichtstrahlablenkung bekannt, bei der mehrere, an der ebenen Seite verspiegelte Halbkugeln jeweils in einer Flüssigkeit in einer Ausnehmung eines gemeinsamen Grundkörpers gelagert sind.

Der Erfindung liegt die Aufgabe zugrunde, eine neue Möglichkeit zum Erzeugen mehrerer zueinander definiert ausgerichteter optischer Achsen unter Verwendung von ebenen Spiegelflächen zu finden, die eine beliebig genaue Ausrichtung der optischen Achsen unabhängig von Herstellungstoleranzen der Komponenten zur Spiegelhalterung sowie eine einfache und stabile Endjustierung gestattet.

Erfindungsgemäß wird die Aufgabe bei einer Anordnung zum Erzeugen mehrerer zueinander definiert ausgerichteter optischer Achsen, bei der die optischen Achsen durch die Reflexionswinkel eines Lichtbündels an unterschiedlich angeordneten ebenen Spiegelflächen definiert sind, dadurch gelöst, dass die ebenen Spiegelflächen auf der Schnittfläche von Kugelsegmenten aufgebracht sind, wobei jedes Kugelsegment stets eine Kalotte und eine ebene Kreisfläche beinhaltet und die verlängerte Symmetrieachse des Kugelsegments über die Kreisfläche hinaus eine Spiegelflächennormale darstellt, dass jedes Kugelsegment mit seiner Kalotte in einer Ausnehmung eines Grundkörpers eingebettet ist, wobei die Ausnehmung eine Mittelachse, die im Wesentlichen an die zur Ausrichtung der optischen Achse erforderliche Richtung der Spiegelflächennormale angepasst ist, sowie eine Mantelfläche aufweist, und zwischen der Kalotte des Kugelsegments und der Mantelfläche der Ausnehmung Kontaktpunkte vorhanden sind, die eine unveränderliche, von der Ausrichtung der Spiegelfläche unabhängige Figur von Kontaktpunkten darstellen, und dass die Kugelsegmente in den Ausnehmungen des Grundkörpers mindestens an den Kontaktpunkten durch eine Verbindungsschicht starr fixiert sind, wobei die ebenen Spiegelflächen vor dem endgültigen Fixieren der Verbindungsschicht entsprechend den auszurichtenden optischen Achsen mit beliebiger Genauigkeit justierbar sind.

Jedes Kugelsegment ist zweckmäßig auf seiner ebenen Schnittfläche vollflächig mit einer Spiegelschicht versehen.
Zur definierten Begrenzung des reflektierten Lichtbündels erweist es sich als Vorteil, wenn die Schnittfläche mit einer Spiegelschicht belegt ist, bei der ein scharf begrenzter Randbereich als Blende vorgesehen ist. Vorzugsweise ist die Spiegelschicht auf die Schnittfläche aufgedampft. Der als Blende vorgesehene Randbereich kann dabei von der Bedampfung ausgenommen oder nachträglich zusätzlich beschichtet sein. Die Kugelsegmente als Träger für die Spiegelflächen sind aus Gründen der einfachen Fertigung zweckmäßig Halbkugeln. Es sind aber auch ¼- bis zu ¾-Kugeln sinnvoll, je nachdem wie groß der Varianzbereich des Winkels zum Ausrichten der Spiegelfläche benötigt wird.
Die Ausnehmungen zur Aufnahme der Kugelsegmente im Grundkörper sind in einer Vorzugsvariante kegelförmig, wobei die unveränderliche Figur der Kontaktpunkte zwischen der Mantelfläche der kegelförmigen Ausnehmung und der Kalotte eines eingebetteten Kugelsegments in diesem Fall eine geschlossene Kreislinie ist.
Eine weitere mögliche Form der Ausnehmungen stellen regelmäßige Pyramiden dar, wobei die unveränderliche Figur der Kontaktpunkte ideal die Eckpunkte eines n-Ecks sein würde, wenn n die Anzahl der Pyramidenseitenflächen ist. Real ist die Figur der Kontaktpunkte (aus Gründen der Fertigungstoleranzen von n-seitigen pyramidenförmigen Ausnehmungen) jedoch eher eine ebene Figur mit weniger als n Ecken, so dass zur sicheren Vermeidung von Kippbewegungen bei der Ausrichtung der Kugelsegmente in der Ausnehmungen von den pyramidenförmigen Ausnehmungen eigentlich nur die dreiseitige Pyramide sinnvoll ist. Die Kontaktpunkte mit der Kalotte des Kugelsegments, die sich jeweils auf einer Mantellinie der Seitenflächen der dreiseitigen pyramidenförmigen Ausnehmung befinden, stellen selbst bei Abweichungen von der Idealform einer regelmäßigen Pyramide ein nahezu gleichseitiges, in jedem Fall aber konstantes Dreieck dar, das eine eindeutige Drei-PunktLagerung für die Kugelkalotte darstellt.

Der Grundkörper sollte zweckmäßig für jede auszurichtende optische Achse einen geeigneten Oberflächenteil zur Einbringung einer besagten Ausnehmung aufweisen, wobei die Flächennormale jedes solchen Oberflächenteils im Bereich der Ausnehmung im Wesentlichen an die zur Ausrichtung der optischen Achse erforderliche Richtung der Spiegelflächennormalen möglichst weitgehend angepasst sein sollte. Diese Maßnahme begünstigt den Zugriff auf die Spiegelflächen bei der Justierung
Sollen mehrere Strahlenbündel innerhalb einer Ebene, die zur Richtung des einfallenden Lichtbündels orthogonal ist, beliebig ausgerichtet werden, ist der Grundkörper vorzugsweise ein Kegel, in dessen Mantelfläche die Ausnehmungen in gewünschter Verteilung stets senkrecht eingebracht werden können.
Zur Ausrichtung mehrerer Strahlenbündel in unterschiedlichen optischen Achsen, die eine vorbekannte (zumeist regelmäßige) Anordnung zueinander aufweisen, ist ein Grundkörper mit ebenen Flächen vorteilhaft einzusetzen, wobei die ebenen Flächen in ihrer Lage bezüglich eines einfallenden Lichtbündels so ausgerichtet sind, dass sie wiederum im Wesentlichen parallel zu den nachfolgend einzurichtenden Spiegelflächen liegen.
Für eine Gleichverteilung von mehreren Strahlenbündeln innerhalb einer Ebene, die zur Richtung des einfallenden Lichtbündels orthogonal ist, kann der Grundkörper zweckmäßig eine n-seitige Pyramide sein, wobei n die Anzahl der Strahlenbündel ist, deren optische Achsen in einer Ebene auszurichten sind. Bei vier innerhalb einer Ebene auszurichtenden Strahlenbündeln, die zur Richtung des einfallenden Lichtbündels und untereinander orthogonal sein sollen, stellt der Grundkörper dann vorteilhaft eine gerade quadratische Pyramide dar.
Sind am Grundkörper die Oberflächenteile zur Einbringung der Ausnehmungen ebene Flächen, so ergibt sich eine weitere Gestaltungsmöglichkeit für die Ausnehmungen. Als solche sind dann auch zylindrische Ausnehmungen geeignet, wobei die zylindrische Ausnehmung im Durchmesser kleiner als der Durchmesser des zugehörigen Kugelsegments ist, so dass die unveränderliche Figur der Kontaktpunkte ein Kreis am oberen Rand der zylindrischen Ausnehmung ist.

Um alle auf der Mantelfläche des Grundkörpers befindlichen Spiegelflächen gleichzeitig beleuchten zu können, ist zweckmäßig eine Lichtquelle vorgesehen, die ein symmetrisch entlang der Symmetrieachse des Grundkörpers verlaufendes kollimiertes Lichtbündel aufweist, wobei die Lichtquelle oberhalb der Spitze des pyramiden- oder kegelförmigen Grundkörpers angebracht ist. Dasselbe Ergebnis erzielt man, indem eine Lichtquelle unterhalb der Mantelfläche des Grundkörpers angebracht ist, wobei der Grundkörper einen zentralen symmetrischen Durchbruch aufweist, durch den das Strahlenbündel der Lichtquelle hindurchgeleitet wird, und oberhalb der Spitze des Grundkörpers ein reflektierender Kollimator angeordnet ist, der das von der Lichtquelle einfallende Strahlenbündel kollimiert auf die Spiegelflächen reflektiert.
Ist der Kollimator ein Kollimatorobjektiv, das sowohl in Transmission als auch in Reflexion zur Kollimation einfallenden Lichts vorgesehen ist, entsteht der weitere Vorteil, dass außer den innerhalb einer Ebene (ggf. auch untereinander orthogonal ausgerichteten) reflektierten Lichtbündeln ein weiteres Ausgangsstrahlenbündel orthogonal zu den reflektierten Lichtbündeln ausgerichtet ist. Diese Konfiguration ist insbesondere für die nachfolgend spezifizierte Konfiguration von 5-Achs-Laserloten interessant. Dabei weist das Kollimatorobjektiv vorzugsweise auf einer Linsenoberfläche eine Spiegelschicht auf, wobei die Spiegelschicht im Bereich der optischen Achse des Kollimatorobjektivs ein Fenster zum Transmittieren eines begrenzten Lichtbündels aufweist. Das Fenster für das transmittierte Lichtbündel kann dabei zweckmäßig eine kreisrunde Öffnung oder eine quadratische Öffnung aufweisen.
Für die Erzeugung von fünf orthogonalen optischen Achsen (unter Verwendung des oben erwähnten Transmissions-Reflexions-Kollimators) wird der zentrale symmetrische Durchbruch im Innern des (vorzugsweise pyramidenförmigen oder kegelförmigen) Grundkörpers im Bereich der Grundfläche zu einer größeren zylinderförmigen Senkbohrung mit kegelförmigem Ende aufgeweitet und die Lichtquelle, die in einer kugelförmigen Halterung zur Justierung der Abstrahlungscharakteristik eingebettet ist, in dieser Senkbohrung drehbar gelagert. Dadurch ist eine raumsparende Unterbringung und eine einfache Justierung der Lichtquelle möglich.
Zur einfacheren Herstellung des Grundkörpers mit der beleuchtungstechnisch zweckmäßigen zentralen Ausnehmung kann dieser auch ein Kegelstumpf oder ein Pyramidenstumpf sein, wobei jeweils zwischen der Deckfläche und der Grundfläche der Durchbruch zum ungehinderten Durchlassen eines zentralen Anteils des von einer Lichtquelle einfallenden Lichtbündels vorhanden ist.

Um die Ausrichtung von sechs Lichtbündeln in sechs zueinander orthogonalen Richtungen (6-Achs-Lot) zu erreichen, wird der Grundkörper vorteilhaft aus zwei kongruenten Teilkörpern mit ebenen Grundflächen zusammengesetzt. Dabei sind die Teilkörper entlang einer gemeinsamen Mittelachse angeordnet, weisen jeweils eine gegenüber der Grundfläche geneigte Mantelfläche, die zur Einbringung von drei regelmäßig um die gemeinsame Mittelachse des Teilkörpers verteilten Ausnehmungen für die verspiegelten Kugelsegmente vorgesehen ist, auf und haben einander parallel gegenüberliegende Grundflächen, die so miteinander verbunden sind, dass jeweils zwei von den in verschiedenen Teilkörpern gelegenen Ausnehmungen Mittelachsen entlang ein und derselben Geraden aufweisen und die optischen Achsen der reflektierten Lichtbündel aller verspiegelten Kugelsegmente einen gemeinsamen virtuellen Schnittpunkt im Zentrum des zusammengesetzten Grundkörpers haben. Des Weiteren werden bei jedem Teilkörper die Spiegelflächen der Kugelsegmente von einer Lichtquelle, die ein kollimiert einfallendes Lichtbündel entlang der gemeinsamen Mittelachse der Teilkörper aufweist, beleuchtet.
Der zweiteilige Grundkörper besteht vorzugsweise aus zwei rotationssymmetrischen Teilkörpern mit ebenen Grundflächen. Die Teilkörper sind vorzugsweise zwei Kegel oder Kugelsegmente. Der Grundkörper kann aber auch aus zwei dreiseitigen Pyramiden zusammengesetzt sein, deren parallele Grundflächen um die gemeinsame Mittelachse der Teilkörper um 60° gegeneinander verdreht sind.
Zur vorteilhaften Beleuchtung und geeigneten Umhausung der optischen Bauteile für die zuletzt beschriebene 6-Achs-Lot-Konfiguration wird zweckmäßig um den Grundkörper ein Gehäuse in Form eines Würfels angeordnet, wobei der Grundkörper mit seiner Mittelachse entlang einer Raumdiagonalen des Würfels und punktsymmetrisch bezüglich des Mittelpunktes des Würfels positioniert ist und entlang der besagten Raumdiagonalen zwei entgegengesetzt einfallende, kollimierte Lichtbündel zur Beleuchtung der Spiegelflächen jeweils eines Teilkörpers des Grundkörpers vorgesehen sind, wobei die Spiegelflächen jedes Teilkörpers so ausgerichtet sind, dass jedes von den Spiegelflächen eines Teilkörpers reflektierte Lichtbündel eine der dem einfallenden Lichtbündel benachbarten Würfelflächen orthogonal und mittig durchquert.

Die Aufgabe der Erfindung wird des Weiteren bei einem Verfahren zum Erzeugen mehrerer zueinander definiert ausgerichteter optischer Achsen, bei dem aus einem kollimierten einfallenden Lichtbündel einer Lichtquelle durch das Ausrichten einstellbarer ebener Spiegelflächen reflektierte Lichtbündel erzeugt werden, wobei durch den Reflexionswinkel der jeweiligen Spiegelfläche gegenüber dem einfallenden Lichtbündel die Richtung der optischen Achsen eingestellt wird, durch folgende Schritte gelöst:
- Herstellen von Trägerkörpern für Spiegelflächen, wobei Kugeln durch ebene Schnitte in Kugelsegmente geteilt werden, so dass Kugelsegmente mit einer Kalotte und einer Kreisfläche entstehen,
- Aufbringen einer Spiegelschicht auf die Kreisfläche der Kugelsegmente, wobei die Symmetrieachse des Kugelsegments oberhalb der Spiegelfläche eine Spiegelflächennormale bezüglich der auszurichtenden optischen Achse ist,
- Herstellen eines Grundkörpers, wobei für jede auszurichtende optische Achse in die Oberfläche des Grundkörpers eine Ausnehmung mit einer Mittelachse und einer nicht sphärischen Mantelfläche so eingebracht wird, dass die Mittelachse der Ausnehmung wenigstens näherungsweise an die für die Ausrichtung der optischen Achse erforderliche Richtung der Spiegelflächennormale angepasst ist, und die Form der Ausnehmungen so gewählt wird, dass sie jeweils das Kugelsegment unverschiebbar, aber um den Krümmungsmittelpunkt der Kalotte drehbar lagert,
- Aufbringen einer Verbindungsschicht auf mindestens eine der Oberflächen von Kalotte und Ausnehmung, wobei die Verbindungsschicht zum späteren starren Fixieren der beiden Oberflächen verwendet wird,
- Einbetten der Kugelsegmente mit deren Kalotten in die Ausnehmungen des Grundkörpers,
- Ausrichten der unterschiedlichen Spiegelflächen mittels einer Masterschablone, die die gewünschten Ausrichtungen der optischen Achsen durch Ausrichtflächen beinhaltet, und
- Fixieren der verspiegelten Kugelsegmente im Bereich der Kontaktpunkte zwischen Kalotte des Kugelsegments und Mantelfläche der Ausnehmung durch starres Verbinden mittels der Verbindungsschicht.
Dieses Verfahren sichert insbesondere eine reproduzierbare Ausrichtung von definiert vorgegebenen optischen Achsen.
Vorteilhaft werden die Ausnehmungen durch Senkbohrungen kegelförmig in den Grundkörper eingebracht und die Kugelsegmente entlang einer Kreislinie von Kontaktpunkten an der Kegelmantelfläche der Ausnehmung fixiert.
In ebenflächigen Oberflächenteilen des Grundkörpers können die Ausnehmungen aber auch durch zylindrische Bohrungen mit einem Durchmesser, der kleiner als die Kreisfläche des Kugelsegments ist, in den Grundkörper eingebracht werden und die Kugelsegmente entlang einer Kreislinie von Kontaktpunkten am oberen Rand der Zylindermantelfläche der Ausnehmung fixiert werden.
Eine weitere Art, geeignete Ausnehmungen in den Grundkörper einzubringen, besteht in der Herstellung des Grundkörpers mit gleichzeitiger Abformung von dreiseitigen pyramidenförmigen Ausnehmungen, wobei die Kugelsegmente um jeweils einen Kontaktpunkt herum an jeder der Mantelflächen der pyramidenförmigen Ausnehmung mit der Kalotte fixiert werden.
Zur Fixierung des Kugelsegments in der Ausnehmung wird vorteilhaft mindestens an den Kontaktpunkten auf einer der Oberflächen von Kugelkalotte oder Mantelfläche der Ausnehmung ein Kleber aufgetragen. Zweckmäßig vereinfacht wird der Kleberauftrag, indem die Kugelkalotte in den Kleber getaucht wird.
Vorzugsweise wird dabei ein Kleber aufgetragen, der nach der Justierung der Kugelsegmente durch Energieeintrag ausgehärtet wird. Am besten geeignet ist dazu ein durch UV-Beleuchtung härtender Kleber, der durch einen im Grundkörper zentral angeordneten Zugang zu den Ausnehmungen von der Unterseite der Kugelsegmente her mittels einer UV-Lichtquelle ausgehärtet wird.

In einer anderen vorteilhaften Variante werden mindestens die Kontaktpunkte der Oberflächen von Kugelkalotte und Ausnehmung mit einer durch Energieeintrag schmelzbaren Beschichtung versehen, die dann anschließend an die Justierung der Kugelsegmente verschmolzen werden.
Eine weitere Fixierungsmaßnahme beinhaltet, dass mindestens Bereiche um die Kontaktpunkte der Oberflächen von Kugelkalotte und Ausnehmung mit einer metallischen Beschichtung versehen werden, wobei die metallischen Beschichtungen beider Oberflächen durch Laserlöten miteinander verschmolzen werden.
Beim Justieren werden durch die Masterschablone zum Ausrichten der Spiegelflächen jeweils höchstens drei Ausrichtflächen gleichzeitig in Kontakt mit den vorgesehenen Spiegelflächen gebracht, bevor die so ausgerichteten Spiegelflächen mittels der zwischen den zugeordneten Oberflächen von Kugelkalotte und Ausnehmung eingebrachten Verbindungsschicht gezielt zur starren Verbindung der Kontaktpunkte veranlasst werden. Dadurch wird eine hochgenaue (eindeutige) Ausrichtung der Spiegelflächen durch eine Drei-Punkt-Auflage der Schablone gesichert.
Zum Ausrichten von mehr als drei Spiegelflächen zueinander wird dann jede weitere Spiegelfläche durch die Einbeziehung von jeweils zwei bereits fixierten Spiegelflächen justiert und anschließend fixiert.

Mit der erfindungsgemäßen Lösung (Anordnung und Verfahren) ist es möglich, mehrere zueinander definiert ausgerichtete optische Achsen unter Verwendung von ebenen Spiegelflächen zu erzeugen, die mit beliebiger Genauigkeit unabhängig von Herstellungstoleranzen der Komponenten zur Spiegelhalterung ausgerichtet werden können sowie eine einfache und stabile Endjustierung der Spiegelflächen gestatten.

Die Erfindung soll nachstehend anhand von Ausführungsbeispielen näher erläutert werden. Die Zeichnungen zeigen:
- Fig. 1:: eine Prinzipansicht der erfindungsgemäßen Anordnung mit zwei Spiegelflächen,
- Fig. 2:: eine Variante für zylindrische Ausnehmungen im Grundkörper,
- Fig. 3:: eine Variante mit pyramidenförmigen Ausnehmungen im Grundkörper,
- Fig. 4:: als Form des Grundkörpers eine quadratische Pyramide in Draufsicht und einer Schnittdarstellung,
- Fig. 5:: den Grundkörper in Form eines Kegels in Draufsicht und Schnitt,
- Fig. 6: eine Anwendung der erfindungsgemäßen Anordnung als 5-Achslot,
- Fig. 7: einen Grundkörper mit drei gleichmäßig verteilten Spiegelflächen in der Draufsicht,
- Fig. 8: den Aufbau eines 6-Achslotes in der Anordnung von zwei kongruenten Teilkörpern gemäß Fig. 7,
- Fig. 9: eine räumliche Darstellung zu Fig. 8,
- Fig. 10: eine Prinzipdarstellung des erfindungsgemäßen Verfahrens sowie
- Fig. 11: die Ausrichtung der Spiegelflächen an einem Grundkörper für ein Mehrachslot.

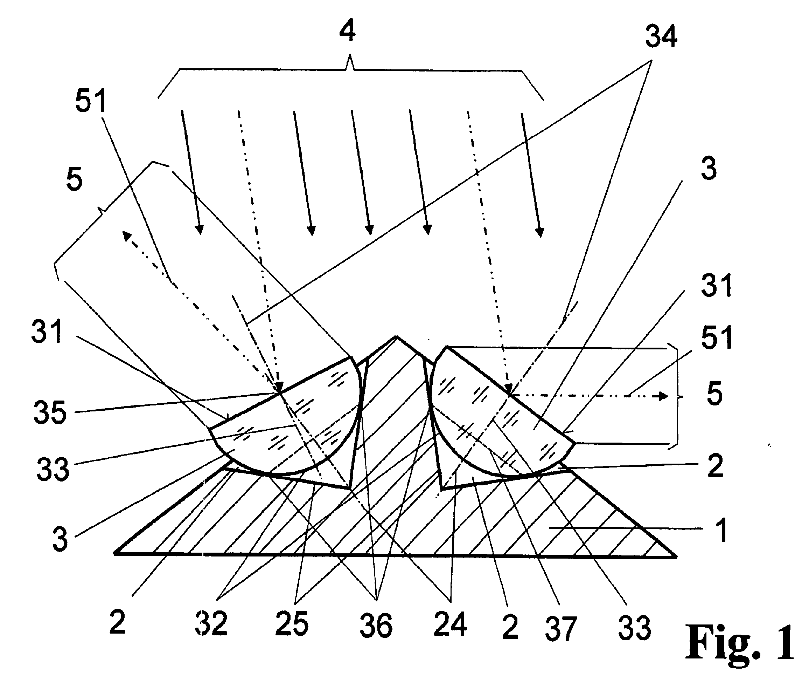

Die erfindungsgemäße Lösung besteht in ihrem Grundaufbau - wie in Fig. 1 schematisch dargestellt - aus einem Grundkörper 1 mit Ausnehmungen 2 zur Aufnahme von Kugelsegmenten 3, auf deren ebenen Schnittflächen Spiegelflächen 31 aufgebracht sind. Die Kugelsegmente 3 bieten den besonderen Vorzug für die Halterung der Spiegelfläche 31, dass sowohl die Spiegelfläche 31 als auch ihr Trägerkörper (Kugelsegment 3) dieselbe Symmetrieachse 33 haben, die zugleich als Spiegelflächennormale 34 das Einfallslot für ein einfallendes Lichtbündel 4 unter einem bestimmten (von null verschiedenen) Einfallswinkel 41 darstellt. Die Spiegelflächen 31 selbst sind mit sehr genauer Randbegrenzung einfach auf die Schnittfläche des Kugelsegments 3 aufzubringen, weil dazu direkt die kreisförmige Kante zwischen der Schnittfläche und der Kalotte 32 zur Verfügung steht. Zweckmäßig wird eine Spiegelschicht aufgedampft.
Aufgabe der Spiegelflächen 31 ist es, aus einem einfallenden Lichtbündel 4 mit großer Genauigkeit in vorgegebenen Richtungen reflektierte Lichtbündel 5 (im Weiteren wegen des Primats der Richtungsverkörperung auch verkürzt als optische Achsen 51 bezeichnet) zu erzeugen. Dazu sind die Ausnehmungen 2 im Grundkörper 1 so beschaffen, dass jeweils die Kalotte 32 eines Kugelsegments 3 in der Ausnehmung ausschließlich Rotationsfreiheitsgrade besitzt und somit um ihren Krümmungsmittelpunkt 35 (in einem begrenzten Winkelbereich) frei drehbar ist, solange sie nicht durch eine geeignete Verbindungsschicht 38 an ihren Kontaktpunkten 36 mit der Mantelfläche 25 der Ausnehmung 2 starr verbunden ist.
Die Ausnehmungen 2 sind so gestaltet, dass sich die Kontaktpunkte 36 möglichst gleichverteilt zu einer nicht überbestimmten Lagerung für die Kalotte 32 des verspiegelten Kugelsegments 3 ergeben.
In Fig. 1 ist dazu die (vor allem herstellungstechnisch) einfachste Lösung mit einer Kegelform der Ausnehmung 2 angedeutet, wobei sich die Kontaktpunkte 36 zu einer Linie 37, die eine Kreislinie darstellt, verbinden. Dabei ist die Ausrichtung der Mittelachsen 24 der Ausnehmungen 2 bereits weitgehend an die spätere Ausrichtung der Spiegelnormalen 34 der jeweiligen Spiegelfläche 31 angepasst, um ein Herausrutschen der Kalotten 32 beim nachfolgenden (druckbelasteten) Ausrichten und Fixieren der Kugelsegmente 3 in der Ausnehmung 2 des Grundkörpers 1 zu vermeiden.
Ein einfallendes Lichtbündel 4, das zugleich auf mehrere Spiegelflächen 31 trifft, kann somit in mehrere reflektierte Lichtbündel 5 aufgeteilt werden, wobei deren optische Achsen 51 mittels der Spiegelfläche 31, die jeweils auf der Kalotte 32 des Spiegelsegments 3 drehbar in der Ausnehmung 2 gelagert sind, in einem großen Bereich ausgerichtet und anschließend fixiert werden können. Die Möglichkeiten der Fixierung werden unten näher beschrieben.

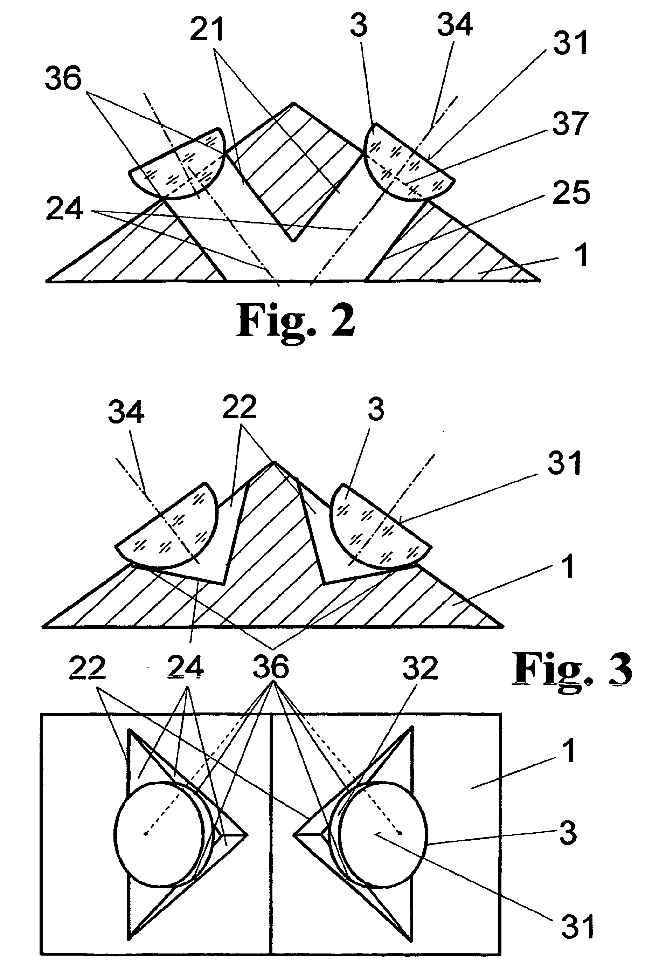

In Fig. 2 ist eine andere Lagerungsvariante mit denselben Dreh- und Ausrichtungsmöglichkeiten der verspiegelten Kugelsegmente 3 wie in Fig. 1 beschrieben. Hier weist der Grundkörper 1 zylindrische Ausnehmungen 21 auf. Die Ausrichtung der Mittelachsen 24 der zylindrischen Ausnehmung 21 sind ebenfalls möglichst weitgehend an die spätere Ausrichtung der Spiegelnormalen 34 der Spiegelfläche 31 angepasst. Der Durchmesser der zylindrischen Ausnehmungen 21 ist so gewählt, dass er kleiner ist als der Durchmesser des Kugelsegments 3. Damit gleitet die Kalotte 32 des Kugelsegments 3 auf dem oberen Rand der Mantelfläche 25 der zylindrischen Ausnehmung 21. Die Kontaktpunkte 36 zwischen Ausnehmung 21 und Kalotte 32 bilden wiederum eine geschlossene Kreislinie 37.

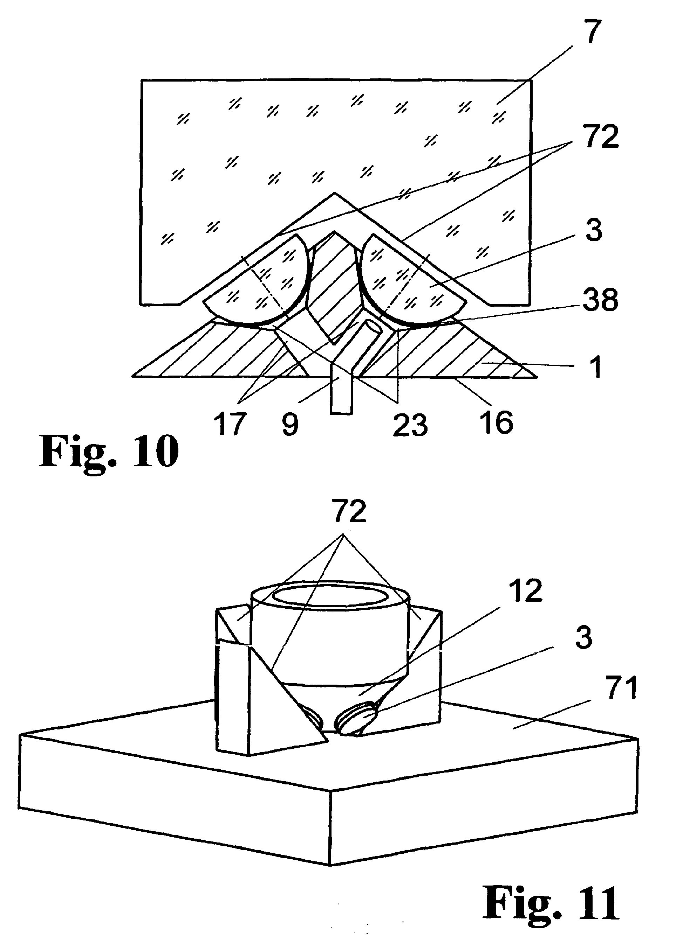

Fig. 3 enthält eine Schnittdarstellung sowie eine Draufsicht von einem Grundkörper 1 in Form eines dreiseitigen Prismas. Letzteres weist eine geeignete Form für die erfindungsgemäße Ausrichtung von zwei optischen Achsen 51 auf. Bei diesem Beispiel sind die Ausnehmungen 2 im Grundkörper 1 als pyramidenförmige Ausnehmungen 22 gestaltet, wobei wegen der kippfreien Lagerung der Kalotte 32 in der Ausnehmung 2 eine dreiseitige pyramidenförmige Ausnehmung 22 sinnvoll ist. Alle regelmäßigen n-seitigen Pyramidenformen sind zwar theoretisch ebenfalls geeignet, jedoch infolge begrenzter Fertigungsgenauigkeiten und der überbestimmten n-Punktlagerung der Kalotte 32 an n Mantelflächen 25 nicht zweckmäßig. Dagegen kommt es bei der dreiseitigen pyramidenförmigen Ausnehmung 22 auf die exakte Regelmäßigkeit der Pyramidenform gar nicht so sehr an, weil die resultierende Berührung der Kalotte 32 mit den Seiten der Mantelfläche 25 der pyramidenförmigen Ausnehmung 22 in nur drei Kontaktpunkten 36 stets zu einer definierten Lagerung der Kalotte 32 führt. Bei der idealen (regelmäßigen) dreiseitigen pyramidenförmigen Ausnehmung 22 liegen die Kontaktpunkte 36 der Kalotte 32 jeweils auf der mittleren Mantellinie der drei Seiten der Mantelfläche 25, wie es die untere Draufsicht von Fig. 3 erkennen lässt.

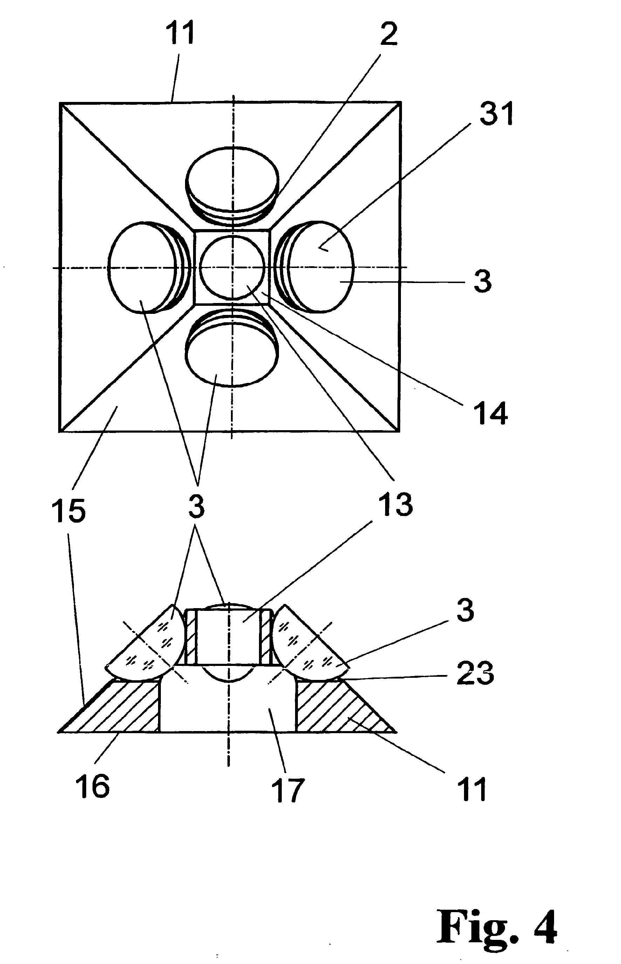

In Fig. 4 ist ein Beispiel zur Ausrichtung von vier optischen Achsen 51 in einer Draufsicht und einer Schnittdarstellung dargestellt. Die Ausrichtung soll hierbei innerhalb einer Ebene erfolgen, wobei die optischen Achsen 51 untereinander orthogonal sind. Das einfallende Bündel 4 (nicht dargestellt) fällt dabei senkrecht zur Zeichenebene der Draufsicht ein, in der unteren Schnittzeichnung parallel zur Mittelachse (in Fig. 4 gleich Symmetrieachse) des Grundkörpers 1. Ein zweckmäßiger Grundkörper 1 für vier orthogonale optische Achsen 51 ist eine vierseitige quadratische Pyramide 11, wobei die vier Seiten der Mantelfläche 15 der Pyramide 11 jeweils eine Ausnehmung 2 für die Einbringung .der verspiegelten Kugelsegmente 3 beinhalten. Die Seiten der Mantelfläche 15 der Pyramide 11 sind vorzugsweise unter einem Winkel von 45° zur Grundfläche 16 der Pyramide 11 geneigt und münden in eine Deckfläche 14, die den Grundkörper 1 eigentlich in einen Pyramidenstumpf überführt. Die Kappung der Spitze der Pyramide 11 dient dabei jedoch ausschließlich einer weiteren Fortbildung der erfindungsgemäßen Anordnung, indem ein zentraler Durchbruch 13 (in Form eines Hohlzylinders) zum Durchlassen eines begrenzten (mittleren) Teils des einfallenden Lichtbündels 4 in die Pyramide 11 eingebracht wird. Damit bietet die Variante der Grundkörperform als Pyramide 11 die Möglichkeit, fünf orthogonale optische Achsen 51 zu erzeugen, wobei vier reflektierte Lichtbündel 5 in einer Ebene parallel zur Grundfläche 16 der Pyramide 11 liegen und ein transmittierter Anteil des einfallenden Lichtbündels 4 auf dieser Ebene der reflektierten Lichtbündel 5 senkrecht steht.
Die Ausnehmungen 2 sind - wie in der unteren Schnittzeichnung von Fig. 3 zu erkennen - als kegelförmige Ausnehmungen 23 ausgeführt und zweckmäßig durch Senkbohrungen orthogonal in die Seiten der Mantelfläche 15 der Pyramide 11 eingebracht. In die Grundfläche 16 der Pyramide 11 ist zusätzlich eine partielle Erweiterung des zentralen Durchbruchs 13 als unterer bzw. hinterer Zugang 17 zu den kegelförmigen Ausnehmungen 23 eingearbeitet worden. Damit ergibt sich insbesondere bei der Befestigung der Kugelsegmente 3 (nach deren Justierung) der Vorteil, dass sich infolge der geschlossenen Linie 37 der Kontaktpunkte 36 unterhalb der Kalotte 32 einerseits keine Luft und kein überschüssiges Material einer Verbindungsschicht 38 (dargestellt in Fig.10), z.B. Kleber, stauen können und andererseits jeweils eine Zugangsstelle zum Aushärten oder Verschmelzen der Verbindungsschicht 38 in der kegelförmigen Ausnehmung 23 unterhalb der Kalotte 32 des verspiegelten Kugelsegments 3 gegeben ist.

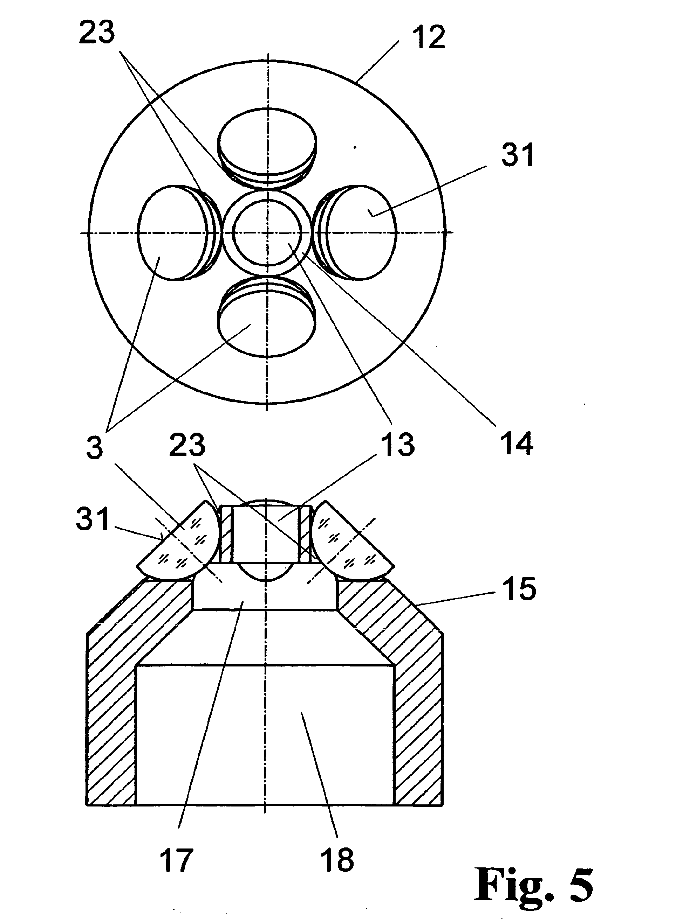

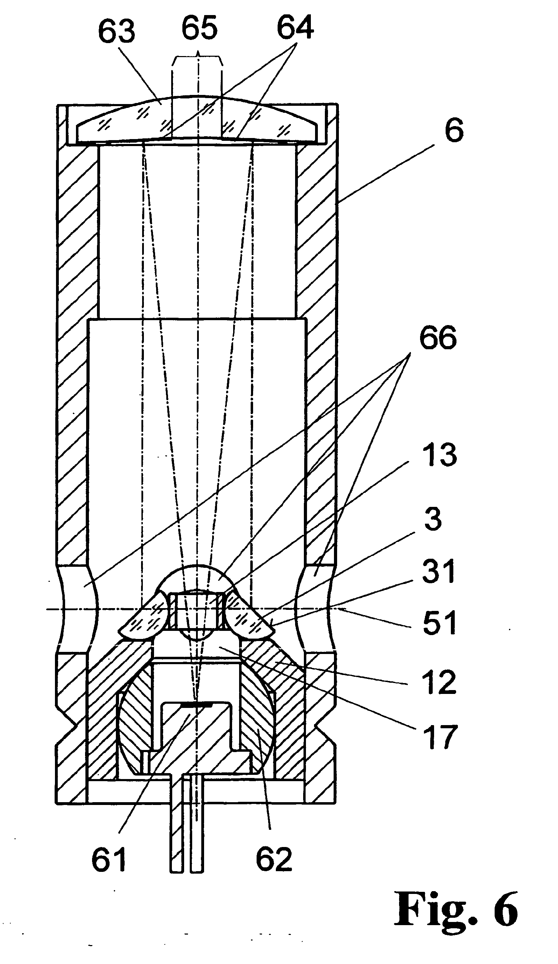

Fig. 5 zeigt einen zu Fig. 4 sehr ähnlichen Aufbau der Anordnung der verspiegelten Kugelsegmente 3, jedoch hat der Grundkörper 1 in diesem Fall die Form eines Kegels 12. Dabei ist die Mantelfläche 15 ebenfalls geeignet, die kegelförmigen Ausnehmungen 23 durch senkrechte Bohrungen in Oberfläche des Kegels 12 einzubringen, wenn die Mantelfläche 15 in einer Weise geneigt ist, die zur Ausrichtung der Spiegelnormalen 34 der Spiegelflächen 31 erforderlich ist, um das einfallende Lichtbündel 4 in die gewünschten Richtungen der optischen Achsen 51 umzulenken. Das einfallende Lichtbündel 4 soll dabei in gleicher Weise, wie zu Fig. 4 beschrieben, auf den Grundkörper 1 - und zwar auf den Teil der Mantelfläche 15 des Kegels 12, der mit den Spiegelflächen 31 belegt ist - gerichtet sein. Die Spiegelflächen 31 sind auch hier so ausgerichtet, dass die reflektierten Lichtbündel 5 innerhalb einer Ebene verlaufende optische Achsen 51 bilden und wiederum paarweise zueinander orthogonal sind.
Als Besonderheit gegenüber der in Fig. 4 gezeigten Innengestaltung des Grundkörpers 1 ist der Kegel 12, der einen einfachen rotationssymmetrischen Körper (z.B. Drehteil) darstellt, zylindrisch verlängert und weist in Fortsetzung des zylindrischen zentralen Durchbruchs 13 und des erweiterten Zugangs 17 zu den Ausnehmungen 23 nochmals eine diametrale vergrößerte Senkbohrung 18 auf. Diese Senkbohrung 18 erzeugt einen Hohlraum, der eine geeignet dimensionierte Kugelform auf einer kreisförmigen Berührungslinie nahezu spielfrei drehbar lagernd aufnehmen kann. Diese Vorkehrung findet in der nachfolgenden Fig. 6 ihre spezielle Anwendung zur Unterbringung einer justierbaren Lichtquellenhalterung.

Fig. 6 verwendet den in Fig. 5 dargestellten Grundkörper 1 in seiner Ausbildung als Kegel 12 zur Realisierung eines 5-Achs-Lotes 6. In dem bereits zu Fig. 5 beschriebenen Hohlraum in Form der Senkbohrung 18 ist zur Justierung einer Lichtquelle 61 eine kugelförmige Halterung 62 vorgesehen, die nach Belieben in ihrer Abstrahlungscharakteristik so ausgerichtet werden kann, dass ihr leicht divergentes Bündel mittels eines oberhalb der Spitze des Kegels 12 angebrachten reflektierenden Kollimators 63 als paralleles (kollimiertes) einfallendes Lichtbündel 4 auf die Spiegelflächen 31 zurückgeworfen wird. Der Kollimator 63 ist in dieser Anwendung der erfindungsgemäßen Anordnung ein Kollimatorobjektiv, bei dem an einer Linsenoberfläche eine Spiegelschicht 64 aufgebracht ist, die in ihrem zentralen Bereich ein Fenster 65 zum Durchlassen eines (ebenfalls kollimierten) Teils des von der Lichtquelle 61 kommenden Lichtbündels aufweist. Dabei kann das Fenster 65 entweder kreisförmig oder auch quadratisch geformt sein. Die quadratische Form ist genau dann vorteilhaft, wenn sie mit ihren Seitenkanten parallel zu den Richtungen der vier orthogonal ausgerichteten optischen Achsen 51 der reflektierten Lichtbündel 5 ausgerichtet ist. Hierdurch kann an dem projizierten Abbild des Fensters 65 durch Beugungserscheinungen ein zusätzliches Kreuzmuster erzeugt werden, das zu den reflektierten optischen Achsen parallel ausgerichtet ist und als zusätzliche Ausrichthilfe des 5-Achs-Lotes 6 verwendet werden kann.
Der am Kollimator 63 von dessen Spiegelschicht 64 reflektierte Anteil des Lichtes der Lichtquelle 61 wird kollimiert und gleichmäßig auf alle vier verspiegelten Kugelsegmente 3 geleitet und von den zugehörigen Spiegelflächen 31 um 90° abgelenkt. Diese Reflexion geschieht genauso, wie bereits zu Fig. 4 und Fig. 5 beschieben, so dass innerhalb einer Ebene zueinander orthogonale optische Achsen 51 entstehen. Diese so reflektierten Lichtbündel 5, die durch die vollständig verspiegelte kreisrunde Schnittfläche jedes Kugelsegments 3 jeweils einen annähend kreisförmigen Querschnitt aufweisen, werden durch Austrittsfenster 66 durch die Wandung des 5-Achs-Lotes 6 nach außen geführt und stehen dort als vier orthogonale optische Achsen 51 für Messaufgaben zur Verfügung (zusammen mit der fünften Achse, die durch den durch den Kollimator 63 transmittierten Anteil des Lichtquellenbündels erzeugt wird).

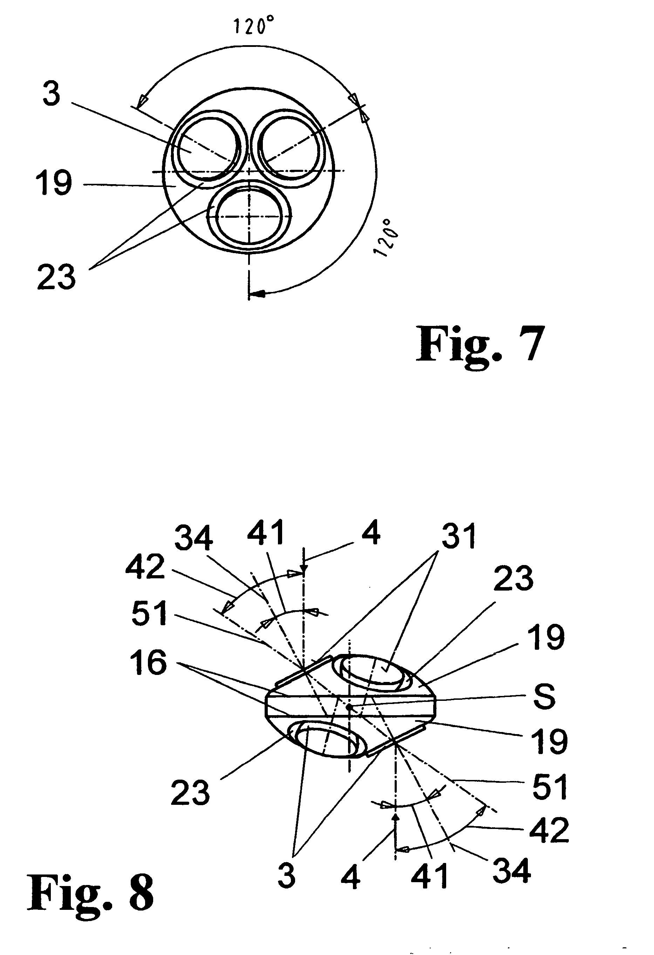

Die in Fig. 7 bis 9 dargestellte Variante der erfindungsgemäßen Anordnung ist für ein 6-Achs-Lot konzipiert. Gleich geblieben gegenüber den vorherigen Beispielen ist die Art der Spiegelträger in Form von Kugelsegmenten 3, die auf ihrer Schnittfläche verspiegelt sind. Die Kalotte 32 jedes Kugelsegments 3 ist wiederum in eine kegelförmige Ausnehmung 23 des Grundkörpers 1 eingebettet. Der Grundkörper 1 kann wieder die bevorzugte Form eines Kegels 12 oder aber die Form eines Kugelsegments enthalten. Statt der Form eines Kegels 12 oder eines Kugelsegments könnten aber auch 3n-seitige regelmäßige Pyramiden, wobei n≥1 ist, eingesetzt werden, obwohl die Wahl von rotationssymmetrischen Körpern (vor allem wegen der einfacheren Herstellung) vorzuziehen sind.
An der Ausgestaltung der Erfindung gemäß den Figuren 7 bis 9 besteht das Neue darin, dass der Grundkörper 1 ein Doppelkörper ist, der aus zwei kongruenten Teilkörpern 19 besteht, wobei die Teilkörper 19 ebene Grundflächen 16, die einander zugekehrt und parallel zueinander angeordnet sind, aufweisen und die Mittelachsen beider Teilkörper 19 auf einer Geraden liegen.
Fig. 7 zeigt eine Draufsicht auf einen der Teilkörper 19. Auf jedem Teilkörper 19 (der die bereits oben diskutierten Formen Kegel 12, dreiseitige Pyramide 11, Kugelsegment oder andere rotationssymmetrische Formen aufweisen kann) sind drei kegelförmige Ausnehmungen 23 so eingebracht, dass die Ausnehmungen 23 um 120° versetzt um die Mittelachse des Teilkörpers 19 angeordnet sind. Der andere Teilkörper 19 (nicht dargestellt), der sich unterhalb der Zeichenebene erstreckt, ist derart angeordnet, als ob er durch Drehung um 180° um die waagerechte Strich-Punkt-Linie in Fig. 7 gedreht wäre. Dadurch ergibt sich, dass die verspiegelten Kugelsegmente 3 des unterhalb der Zeichenebene gelegenen Kegels gegenüber dem in Draufsicht dargestellten Kegel 12 innerhalb der Zeichenebene um 60° gedreht angeordnet sind. Der Zweck dieser Anordnung der beiden Teilkörper 19 zueinander wird in Fig. 8 ersichtlich und nachfolgend näher beschieben.
Wie aus Fig. 8 ersichtlich, sind die zwei Teilkörper 19 (hier als zwei Kugelsegmente gezeichnet) zu einem einheitlichen Grundkörper 1 so zusammengefügt, dass die Spiegelflächen 31 jeweils paarweise parallele Spiegelnormalen 34 haben. Die jeweils zwei Spiegelflächen 31 mit den parallelen Spiegelnormalen 34 sind danach in den zugehörigen kegelförmigen Ausnehmungen 23 so auszurichten, dass die von deren Spiegelflächen 31 reflektierten Lichtbündel 5 im Innern des Grundkörpers 1 einen virtuellen Schnittpunkt S ihrer optischen Achsen 51 bilden, wobei die Teilkörper 19 von zwei jeweils entgegengesetzt auf einen der Teilkörper 19 gerichteten, parallel zur gemeinsamen Mittelachse einfallenden Lichtbündeln 4 beleuchtet werden. Alle so definierten Paare von Spiegelflächen 31 führen dazu, dass die Gesamtheit aller an den sechs Spiegelflächen 31 reflektierten Lichtbündel 5 im Innern des Grundkörpers 1 einen virtuellen Schnittpunkt S aller optischen Achsen 51 bilden. Bei dieser Konfiguration sind die Einfallswinkel 41 des auf jeden der Teilkörper 19 einfallenden Lichtbündels 4 zu jeder Spiegelfläche 31 so eingestellt, dass aus dem doppelten Einfallswinkel 42 zusammen mit dem 120°-Versatz der reflektierten Lichtbündel 5 um die Mittelachse des Teilkörpers 19 eine orthogonale Ausrichtung der optischen Achsen 51 untereinander resultiert. Der Einfallswinkel 41 ist dabei auch vorzugsweise als Maß für die Neigung der Mantelfläche 15 des Teilkörpers 19 (mindestens im Bereich der Ausnehmungen) zu verwenden, damit die Spiegelflächen 31 jeweils möglichst nahezu eine Tangentialebene an der Mantelfläche 15 bilden und damit die Gesamtanordnung kompakt bleibt.

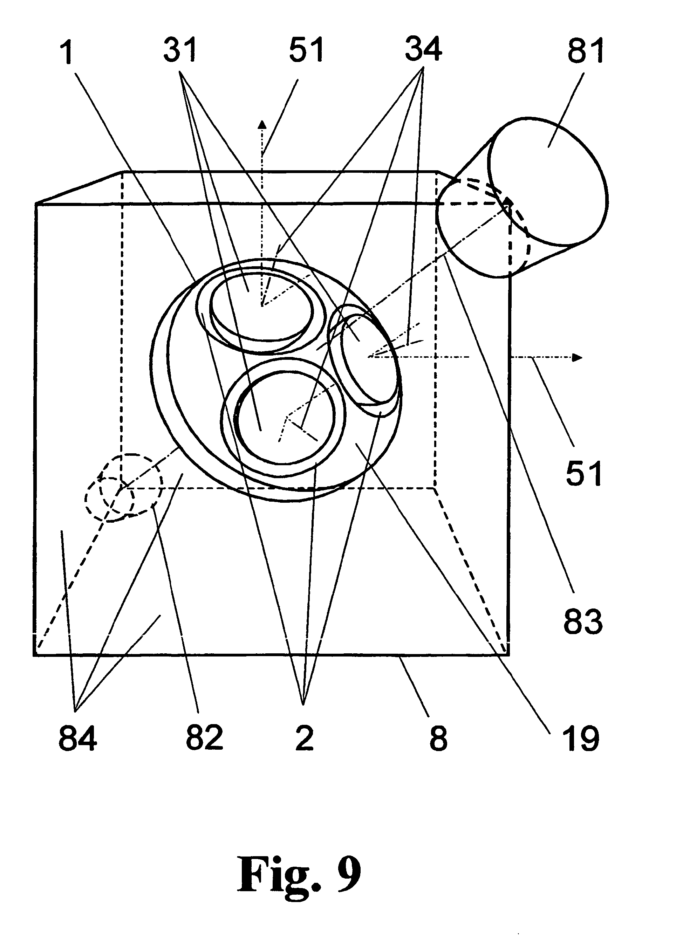

Fig. 9 greift die kompakte Konfiguration aus Fig. 8 nochmals in einer perspektivischen Darstellung auf, an der die Winkelverhältnisse von einfallenden und reflektierten Lichtbündeln 4 und 5 noch einmal auf andere Weise deutlicht werden.
Das auf Basis der Konfiguration von Fig. 7 und 8 erzeugte 6-Achs-Lot mit sechs zueinander orthogonalen optischen Achsen 51, von denen drei als orthogonales System (mathematisches Dreibein) jeweils von den Spiegelflächen 31 eines Teilkörpers 19 erzeugt werden, erfordert sehr genaue Winkeleinstellungen von Beleuchtung und Teilkörpern 19. Aus diesem Grund ist es besonders vorteilhaft, ein solches 6-Achs-Lot mit einem Gehäuse in Form eines Würfels 8 aufzubauen. Entlang einer Raumdiagonalen 83 des Würfels 8 sind an den so verknüpften Würfelecken Lichtquellen 81 und 82 ausgerichtet, so dass die von ihnen abgestrahlten kollimierten Lichtbündel auf den in der Würfelmitte befindlichen Grundkörper 1 gerichtet sind. Der Grundkörper 1 ist mit seinen beiden Teilkörpern 19, von denen nur der der vorderen Lichtquelle 81 zugewandte Teilkörper 19 in Fig. 9 sichtbar ist, ebenfalls an der Raumdiagonalen 83 ausgerichtet, indem die Mittelachsen seiner Teilkörper 19 entlang dieser Raumdiagonalen 83 verlaufen. Der Mittelpunkt des Grundkörpers 1 liegt dabei im Mittelpunkt des Würfels 8. Die Spiegelflächen 31 sind gemäß den Angaben zu Fig. 8 mit ihren Spiegelnormalen 34 in den Ausnehmungen 2 des jeweiligen Teilkörpers 19 so befestigt, dass alle optischen Achsen 51 der von den Spiegelflächen 31 reflektierten Lichtbündel 5 einen virtuellen Schnittpunkt S (nur in Fig. 8 dargestellt) haben, der zugleich der Mittelpunkt des Grundkörpers 1 sowie des Würfels 8 ist. Die durch Reflexion an den Spiegelflächen 31 erzeugten optischen Achsen 51 treten für jede der Lichtquellen 81 und 82 orthogonal und mittig aus den der jeweiligen Lichtquelle 81 bzw. 82 benachbarten Würfelflächen 84 aus. Die dafür erforderlichen Austrittsfenster wurden aus Gründen der Übersichtlichkeit in Fig. 9 nicht eingezeichnet.

Die Erfindung betrifft weiterhin ein Verfahren zum Erzeugen mehrerer zueinander definiert ausgerichteter optischer Achsen, bei dem aus einem kollimierten einfallenden Lichtbündel einer Lichtquelle durch das Ausrichten einstellbarer ebener Spiegelflächen reflektierte Lichtbündel erzeugt werden, wobei durch den Reflexionswinkel der jeweiligen Spiegelfläche gegenüber dem einfallenden Lichtbündel die Richtung der optischen Achsen eingestellt wird, wobei in dem Verfahren folgende Schritte ausgeführt werden:
- Herstellen von Trägerkörpern für Spiegelflächen, wobei Kugeln durch ebene Schnitte in Kugelsegmente geteilt werden, so dass Kugelsegmente mit einer Kalotte und einer Kreisfläche entstehen,
- Aufbringen einer Spiegelschicht auf die Kreisfläche der Kugelsegmente, wobei die Symmetrieachse des Kugelsegments oberhalb der Spiegelfläche die Spiegelflächennormale bezüglich der auszurichtenden optischen Achse ist,
- Herstellen eines Grundkörpers, wobei für jede auszurichtende optische Achse in die Oberfläche des Grundkörpers eine Ausnehmung mit einer Mittelachse und einer Mantelfläche so eingebracht wird, dass die Mittelachse der Ausnehmung wenigstens näherungsweise an die für die Ausrichtung der optischen Achse erforderliche Richtung der Spiegelflächennormale angepasst ist, und die Form der Ausnehmungen so gewählt wird, dass sie jeweils das Kugelsegment unverschiebbar, aber um den Krümmungsmittelpunkt der Kalotte drehbar lagert,
- Aufbringen einer Verbindungsschicht auf mindestens eine der Oberflächen von Kalotte und Ausnehmung, wobei die Verbindungsschicht zum späteren starren Fixieren der beiden Oberflächen verwendet wird,
- Einbetten der Kugelsegmente mit deren Kalotten in die Ausnehmungen des Grundkörpers,
- Ausrichten der unterschiedlichen Spiegelflächen mittels einer Masterschablone, die die gewünschten Ausrichtungen der optischen Achsen durch Ausrichtflächen für die Spiegelflächen beinhaltet, und
- Fixieren der verspiegelten Kugelsegmente im Bereich der Kontaktpunkte zwischen Kalotte des Kugelsegments und Mantelfläche der Ausnehmung durch starres Verbinden mittels der Verbindungsschicht.

Fig. 10 zeigt dazu eine Prinzipdarstellung des Verfahrens, bei dem die Herstellungsschritte für den Grundkörper 1, für den zur Vereinfachung ein dreiseitiges Prisma gewählt wurde, bereits durch das Einbringen von kegelförmigen Ausnehmungen 23 durch Senkbohrungen und das Schaffen von Zugängen 17 (nur in Fig. 4 und 5 mit Bezugszeichen versehen) abgeschlossen ist. Ebenso sind die Träger für die Spiegelflächen 31 als Kugelsegmente 3 in der Größe von Halbkugeln bereits angefertigt und mit einer Verbindungsschicht 38 (Kleber) versehen (z.B. durch Eintauchen der Kalotten 32 in den Kleber) in die Ausnehmungen 23 eingelegt worden. Die Verbindungsschicht 38, für die in diesem Beispiel ein UV-härtendes Epoxidharz eingesetzt wird, ist zunächst noch geschmeidig und hält die Kalotte des Kugelsegments 3 drehbar beweglich. Zu diesem Zeitpunkt wird eine hochgenau vorgefertigte Masterschablone 7 gegenüber der Grundfläche 16 des Grundkörpers 1 definiert aufgesetzt, wodurch die Spiegelflächen 31 mittels eines leichten Aufsetzdruckes in Parallelstellung zu den Ausrichtflächen 72 der Masterschablone 7 gebracht werden. Mit dieser Vorgehensweise wird für sämtliche Montagezyklen von derartigen vorgefertigten Grundkörpern 1 und verspiegelten Kugelsegmenten 3 bei Verwendung derselben Masterschablone 7 sichergestellt, dass die Spiegelflächen 31 der Kugelsegmente 3 stets in vorausberechneten Winkeln zueinander sowie gegenüber der Richtung des senkrecht zur Grundfläche 16 vorgesehenen Richtung des einfallenden Lichtbündels 4 (hier nicht dargestellt) ausgerichtet sind. Ist die Masterschablone 7 unter leichtem Druck richtig aufgesetzt, wird durch die Zugänge 17 zu den kegelförmigen Ausnehmungen 23 eine UV-Lichtquelle 9 eingebracht, die die Verbindungsschicht 38 aushärtet und damit die Kugelsegmente 3 endgültig fixiert.
Anstelle der eines UV-härtbaren Klebers können auch vielfältige andere Kleber verwendet werden, die eine ausreichende Beweglichkeit der Kugelsegmente 3 für den Justierprozess mittels der Masterschablone 7 gewährleisten, bevor sie (möglichst kurzfristig) ausgehärtet werden. Dabei sind auch lufttrocknende Kleber denkbar, indem über den Zugang 17 im Grundkörper 1 anstelle der in Fig. 10 gezeigten UV-Lichtquelle 9 eine Luftdüse für ein schnelleres Aushärten eingesetzt wird.
Eine weitere Gruppe von Möglichkeiten für die Verbindungsschicht 38 eröffnet sich durch die Aufbringung von zwei Teilschichten auf jede der Oberflächen von Kalotte 32 des Kugelsegments 3 und Mantelfläche 25 der Ausnehmung 2. Hierbei sind neben metallischen Beschichtungen, die anschließend durch Laserlöten oder Schweißen (mindestens an den Kontaktpunkten 36) miteinander verschmolzen werden, auch Kunststoffschichten geeignet, die durch Energieeintrag (Strahlung oder Wärme, jeweils über den Zugang 17 im Grundkörper 1 eingebracht) verschmelzen oder eine anderweitige starre Verbindung eingehen.
Fig. 11 zeigt in Abwandlung des vorstehend zu Fig. 10 beschriebenen Verfahrens bei gleichem Vorfertigungsstadium von Grundkörper 1 und Kugelsegmenten 3 eine Masterschablone 7 mit unten liegendem Schablonenträger 71 auf dem drei Ausrichtflächen 72 angebracht sind. Diese Art der Masterschablone 7 ist insbesondere für Spiegelträger (Grundkörper 1) mit mehr als zwei verspiegelten Kugelsegmenten 3 von Interesse. Dabei ist zu beachten, dass - selbst bei mehr als drei Kugelsegmenten 3 lediglich drei Ausrichtflächen 72 auf dem Schablonenträger 71 vorhanden sind, da nur in diesem Fall eine Überbestimmung der aufgelegten bzw. angedrückten Flächenpaarungen (Spiegelflächen 31 und Ausrichtflächen 72) vermieden wird. Die in Fig. 11 unausgerichtete Fläche des voll sichtbaren Kugelsegments 3 wird dann erst in einem zweiten Andruckschritt der Masterschablone 7 endgültig fixiert. Zu diesem Zweck wird die Masterschablone 7, nach dem Aushärten der Verbindungsschicht 38 an den ersten drei Spiegelflächen 31, um 90° verdreht aufgesetzt, so dass zwei bereits ausgerichtete Kugelsegmente 3 zum Ausrichten der nächsten Spiegelfläche 31 (des nächsten Kugelsegments 3) verwendet werden. Damit ist auch in diesem Fall die genaue Ausrichtung reproduzierbar gewährleistet.

### Bezugszeichenliste

- 1: Grundkörper
- 11: Pyramide
- 12: Kegel
- 13: zentraler Durchbruch
- 14: Deckfläche
- 15: Mantelfläche (des Grundkörpers)
- 16: Grundfläche
- 17: Zugang zu den Ausnehmungen
- 18: Senkbohrung
- 19: Teilkörper

- 2: Ausnehmung
- 21: zylindrische Ausnehmung
- 22: pyramidenförmige Ausnehmung
- 23: kegelförmige Ausnehmung
- 24: Mittelachse
- 25: Mantelfläche (der Ausnehmung)

- 3: Kugelsegment (Spiegelträger)
- 31: Spiegelfläche
- 32: Kalotte
- 33: Symmetrieachse
- 34: Spiegel(flächen)normale
- 35: Krümmungsmittelpunkt
- 36: Kontaktpunkte
- 37: Linie von Kontaktpunkten
- 38: Verbindungsschicht

- 4: einfallendes Lichtbündel
- 41: Einfallswinkel

- 5: reflektiertes Lichtbündel
- 51: optische Achse

- 6: 5-Achslot
- 61: Lichtquelle
- 62: Halterung
- 63: Kollimator
- 64: Spiegelschicht
- 65: Fenster
- 66: Austrittsfenster

- 7: Masterschablone
- 71: Schablonenträger
- 72: Ausrichtflächen

- 8: Würfel
- 81, 82: Lichtquellen
- 83: Raumdiagonale
- 84: Würfelflächen

- 9: UV-Lichtquelle

- S: virtueller Schnittpunkt

## Patentansprüche

1. Anordnung zum Erzeugen mehrerer zueinander definiert ausgerichteter optischer Achsen, bei der die optischen Achsen durch die Ausfallswinkel eines Lichtbündels an unterschiedlich angeordneten ebenen Spiegelflächen definiert sind, **dadurch gekennzeichnet, dass**
- die ebenen Spiegelflächen (31) auf der Schnittfläche von Kugelsegmenten (3) aufgebracht sind, wobei jedes Kugelsegment (3) stets eine Kalotte (32) und eine Kreisfläche beinhaltet und die verlängerte Symmetrieachse (33) des Kugelsegments (3) über die Kreisfläche hinaus eine Spiegelflächennormale (34) darstellt,
- jedes Kugelsegment (3) mit seiner Kalotte (32) in einer Ausnehmung (2) eines Grundkörpers (1) eingebettet ist, wobei die Ausnehmung (2) eine Mittelachse, die im Wesentlichen an die zur Ausrichtung der optischen Achse (51) erforderliche Richtung der Spiegelflächennormale (34) angepasst ist, sowie eine Mantelfläche (25) aufweist, und zwischen der Kalotte (32) des Kugelsegments (3) und der Mantelfläche (25) der Ausnehmung (2) Kontaktpunkte (36) vorhanden sind, die eine unveränderliche und von der Ausrichtung der Spiegelfläche (31) unabhängige Figur von Kontaktpunkten (36) darstellen, und
- die Kugelsegmente (3) in den Ausnehmungen (2) des Grundkörpers (1) mindestens an den Kontaktpunkten (36) durch eine Verbindungsschicht (38) starr fixiert sind,
wobei die ebenen Spiegelflächen (31) vor dem endgültigen Fixieren der Verbindungsschicht (38) entsprechend den auszurichtenden optischen Achsen (51) mit beliebiger Genauigkeit justierbar sind.

2. Anordnung nach Anspruch 1, **dadurch gekennzeichnet, dass**
jedes Kugelsegment (31) auf seiner ebenen Schnittfläche vollflächig mit einer Spiegelschicht versehen ist.

3. Anordnung nach Anspruch 1, **dadurch gekennzeichnet, dass**
die Schnittfläche mit einer Spiegelschicht belegt ist, wobei ein scharf begrenzter Randbereich als Blende zur Begrenzung des reflektierten Lichtbündels (5) vorgesehen ist.

4. Anordnung nach Anspruch 2 oder 3, **dadurch gekennzeichnet, dass**
die Schnittfläche mit einer Spiegelschicht bedampft ist.

5. Anordnung nach Anspruch 1, **dadurch gekennzeichnet, dass**
die Kugelsegmente (3) Halbkugeln sind.

6. Anordnung nach Anspruch 1, **dadurch gekennzeichnet, dass**
die Ausnehmungen (2) kegelförmig sind, wobei die unveränderliche Figur der Kontaktpunkte (36) zwischen der Mantelfläche (25) der kegelförmigen Ausnehmung (23) und der Kalotte (32) eines eingebetteten Kugelsegments (3) eine Kreislinie (37) ist.

7. Anordnung nach Anspruch 1, **dadurch gekennzeichnet, dass**
die Ausnehmungen pyramidenförmig sind, wobei die unveränderliche Figur der Kontaktpunkte (36) Eckpunkte eines ebenen n-Ecks sind, die sich jeweils auf einer Mantellinie der Seitenflächen der pyramidenförmigen Ausnehmung (22) befinden.

8. Anordnung nach Anspruch 7, **dadurch gekennzeichnet, dass**
die Ausnehmungen (2) dreiseitige pyramidenförmige Ausnehmungen (22) sind, wobei die Kontaktpunkte (36) Eckpunkte eines Dreiecks sind, die auf einer Mantellinie der drei Seitenflächen der pyramidenförmigen Ausnehmung (22) angeordnet sind.

9. Anordnung nach Anspruch 1, **dadurch gekennzeichnet, dass**
der Grundkörper (1) für jede auszurichtende optische Achse (51) einen Oberflächenteil zur Einbringung einer besagten Ausnehmung (2) aufweist, wobei die Fiächennormaie des Oberflächenteils im Bereich der Ausnehmung (2) im Wesentlichen an die zur Ausrichtung der optischen Achse (51) erforderliche Richtung der Spiegelflächennormale (34) angepasst ist.

10. Anordnung nach Anspruch 9, **dadurch gekennzeichnet, dass**
der Grundkörper (1) zur Erzeugung von mehreren Strahlenbündeln (5) innerhalb einer Ebene, die zur Richtung des einfallenden Lichtbündels (4) orthogonal ist, ein Kegel (12) ist, in dessen Mantelfläche (15) die kegelförmigen Ausnehmungen (23) in beliebiger Weise verteilt angeordnet sind.

11. Anordnung nach Anspruch 9, **dadurch gekennzeichnet, dass**
der Grundkörper (1) zur Ausrichtung mehrerer Strahlenbündel (5) in unterschiedlichen optischen Achsen (51) ebene Flächen aufweist, wobei die ebenen Flächen in ihrer Lage bezüglich eines einfallenden Lichtbündels (4) so angepasst sind, dass sie im Wesentlichen parallel zu den nachfolgend einzurichtenden Spiegelflächen (31) angeordnet sind.

12. Anordnung nach Anspruch 11, **dadurch gekennzeichnet, dass**
der Grundkörper (1) zur Ausrichtung von mehreren Strahlenbündeln (5) innerhalb einer Ebene, die zur Richtung des einfallenden Lichtbündels (4) orthogonal ist, eine n-seitige Pyramide (11) ist, wobei n die Anzahl der Strahlenbündel (5) ist, deren optische Achsen (51) in einer Ebene auszurichten sind.

13. Anordnung nach Anspruch 12, **dadurch gekennzeichnet, dass**
der Grundkörper (1) zur Erzeugung von vier orthogonalen Strahlenbündeln (5), die zur Richtung des einfallenden Lichtbündels (4) und untereinander orthogonal sind, eine gerade quadratische Pyramide (11) ist.

14. Anordnung nach einem der Ansprüche 11 bis 13, **dadurch gekennzeichnet, dass**
die Ausnehmungen (2) zylindrisch sind, wobei die zylindrische Ausnehmung (21) im Durchmesser kleiner als der Durchmesser des zugehörigen Kugelsegments (3) ist, so dass die unveränderliche Figur der Kontaktpunkte (36) ein Kreis am oberen Rand der zylindrischen Ausnehmung (21) ist.

15. Anordnung nach Anspruch 10, 12 oder 13, **dadurch gekennzeichnet, dass**
zur gleichzeitigen Beleuchtung aller auf der Mantelfläche (15) des Grundkörpers (1) befindlichen Spiegelflächen (31) eine Lichtquelle, die ein symmetrisch entlang der Symmetrieachse des Grundkörpers (1) verlaufendes kollimiertes Lichtbündel aufweist, vorgesehen ist, wobei die Lichtquelle oberhalb der Spitze des Grundkörpers (1) angebracht ist.

16. Anordnung nach Anspruch 10, 12 oder 13, **dadurch gekennzeichnet, dass**
zur gleichzeitigen Beleuchtung aller auf der Mantelfläche (15) des Grundkörpers (1) befindlichen Spiegelflächen (31) eine Lichtquelle unterhalb der Mantelfläche (15) vorgesehen ist, wobei der Grundkörper (1) einen zentralen symmetrischen Durchbruch (13) aufweist, durch den das Strahlenbündel der Lichtquelle (61) hindurchgeleitet wird, und oberhalb der Spitze des Grundkörpers (1) ein Kollimator (63) angeordnet ist, der das von der Lichtquelle (61) einfallende Strahlenbündel kollimiert auf die Spiegelflächen (31) reflektiert.

17. Anordnung nach Anspruch 16, **dadurch gekennzeichnet, dass**
der Kollimator (63) ein Kollimatorobjektiv ist, das sowohl in Transmission als auch in Reflexion zur Kollimation einfallenden Lichts vorgesehen ist.

18. Anordnung nach Anspruch 17, **dadurch gekennzeichnet, dass**
das Kollimatorobjektiv (63) auf einer Linsenoberfläche eine Spiegelschicht (64) aufweist, wobei die Spiegelschicht (64) im Bereich der optischen Achse des Kollimatorobjektivs (63) ein Fenster zum Transmittieren eines begrenzten Lichtbündels aufweist.

19. Anordnung nach Anspruch 18, **dadurch gekennzeichnet, dass**
das Fenster (65) für das transmittierte Lichtbündel eine kreisrunde Öffnung aufweist.

20. Anordnung nach Anspruch 18, **dadurch gekennzeichnet, dass**
das Fenster (65) für das transmittierte Lichtbündel eine quadratische Öffnung aufweist.

21. Anordnung nach Anspruch 16, **dadurch gekennzeichnet, dass**
im Innern des Grundkörpers (1) im Bereich seiner Grundfläche (16) der zentrale symmetrische Durchbruch (13) zu einer größeren zylinderförmigen Senkbohrung (18) mit kegelförmigem Ende zur Aufnahme einer Lichtquelle (61) aufgeweitet ist, wobei die Lichtquelle, die in einer kugelförmigen Halterung (62) zur Justierung der Abstrahlungscharakteristik eingebettet ist, in dieser Senkbohrung (18) drehbar gelagert ist.

22. Anordnung nach Anspruch 10, **dadurch gekennzeichnet, dass**
der Grundkörper (1) ein Kegelstumpf ist, wobei zwischen der Deckfläche (14) und der Grundfläche (16) ein Durchbruch (13) zum ungehinderten Durchlassen eines zentralen Anteils des von einer Lichtquelle (61) einfallenden Lichtbündels vorhanden ist.

23. Anordnung nach Anspruch 12 oder 13, **dadurch gekennzeichnet, dass**
der Grundkörper (1) ein Pyramidenstumpf ist, wobei zwischen der Deckfläche (14) und der Grundfläche (16) ein zentraler Durchbruch (13) zum ungehinderten Durchlassen eines zentralen Anteils des von einer Lichtquelle (61) einfallenden Lichtbündels vorhanden ist.

24. Anordnung nach Anspruch 1, **dadurch gekennzeichnet, dass**
der Grundkörper (1) aus zwei kongruenten Teilkörpern (19) mit ebenen Grundflächen (16) zusammengesetzt ist, wobei
- die Teilkörper (19) entlang einer gemeinsamen Mittelachse angeordnet sind, jeweils eine gegenüber der Grundfläche (16) geneigte Mantelfläche (15), die zur Einbringung von drei regelmäßig um die Mittelachse des jeweiligen Teilkörpers (19) verteilten Ausnehmungen (2) für die verspiegelten Kugelsegmente (3) vorgesehen ist, aufweisen,
- die Grundflächen (16) der Teilkörper (19) einander parallel gegenüberliegend so miteinander verbunden sind, dass die Mittelachsen (24) von jeweils zwei in verschiedenen Teilkörpern (19) gelegenen Ausnehmungen (2) entlang ein und derselben Geraden angeordnet sind und die optischen Achsen (51) der reflektierten Lichtbündel (5) aller verspiegelten Kugelsegmente (3) einen gemeinsamen virtuellen Schnittpunkt (S) haben, und
- die verspiegelten Kugelsegmente (3) je Teilkörper (19) von jeweils einer Lichtquelle (81; 82), die ein kollimiert einfallendes Lichtbündel (4) entlang der gemeinsamen Mittelachse der Teilkörper (19) aufweist, beleuchtet sind.

25. Anordnung nach Anspruch 24, **dadurch gekennzeichnet, dass**
der Grundkörper (1) aus zwei rotationssymmetrischen Teilkörpern (19) mit ebenen Grundflächen (16) besteht.

26. Anordnung nach Anspruch 25, **dadurch gekennzeichnet, dass**
der Grundkörper (1) aus zwei Kegeln (12) besteht.

27. Anordnung nach Anspruch 25, **dadurch gekennzeichnet, dass**
der Grundkörper (1) aus zwei Kugelsegmenten besteht.

28. Anordnung nach Anspruch 24, **dadurch gekennzeichnet, dass**
der Grundkörper aus zwei dreiseitigen Pyramiden (11) besteht, wobei die parallelen Grundflächen (16) der Pyramiden (11) um die gemeinsame Mittelachse der Teilkörper (19) um 60° gegeneinander verdreht sind.

29. Anordnung nach einem der Ansprüche 24 bis 27, **dadurch gekennzeichnet, dass**
um den Grundkörper (1) ein Gehäuse in Form eines Würfels (8) angeordnet ist, wobei der Grundkörper (1) mit seiner Mittelachse entlang einer Raumdiagonalen (83) des Würfels (8) und punktsymmetrisch bezüglich des Mittelpunktes des Würfels (8) positioniert ist und entlang der besagten Raumdiagonalen (83) zwei kollimierte, entgegengesetzt angeordnete Lichtquellen (81; 82) zur Beleuchtung der Spiegelflächen (31) jeweils eines Teilkörpers (19) des Grundkörpers (1) vorgesehen sind, wobei die Spiegelflächen (31) jedes Teilkörpers (19) so ausgerichtet sind, dass jede optische Achse (51) der von den Spiegelflächen (31) eines Teilkörpers (19) reflektierten Lichtbündel (5) eine der zugeordneten Lichtquelle (81; 82) benachbarte Würfelfläche (84) orthogonal durchquert.

30. Verfahren zum Erzeugen mehrerer zueinander definiert ausgerichteter optischer Achsen, bei dem aus einem kollimierten einfallenden Lichtbündel einer Lichtquelle durch das Ausrichten einstellbarer ebener Spiegelflächen reflektierte Lichtbündel erzeugt werden, wobei durch den Reflexionswinkel der jeweiligen Spiegelfläche gegenüber dem einfallenden Lichtbündel die Richtung der optischen Achsen eingestellt wird, **gekennzeichnet durch** folgende Schritte:
- Herstellen von Trägerkörpern für Spiegelflächen (31), wobei Kugeln **durch** ebene Schnitte in Kugelsegmente (3) geteilt werden, so dass Kugelsegmente (3) mit einer Kalotte (32) und einer Kreisfläche entstehen,
- Aufbringen einer Spiegelschicht auf die Kreisfläche der Kugelsegmente (3), wobei die Symmetrieachse (33) des Kugelsegments (3) oberhalb der Spiegelfläche (31) die Spiegelflächennormale (34) bezüglich der auszurichtenden optischen Achse (51) ist,
- Herstellen eines Grundkörpers (1), wobei für jede auszurichtende optische Achse (51) in die Oberfläche des Grundkörpers (1) eine Ausnehmung (2) mit einer Mittelachse (24) und einer Mantelfläche (25) so eingebracht wird, dass die Mittelachse (24) der Ausnehmung (2) wenigstens näherungsweise an die für die Ausrichtung der optischen Achse (51) erforderliche Richtung der Spiegelflächennormale (34) angepasst ist, und die Form der Ausnehmungen (2) so gewählt wird, dass sie jeweils das Kugelsegment (3) unverschiebbar, aber um den Krümmungsmittelpunkt (35) der Kalotte (32) drehbar lagert,
- Aufbringen einer Verbindungsschicht (38) auf mindestens eine der Oberflächen von Kalotte (32) und Ausnehmung (2), wobei die Verbindungsschicht (38) zum späteren starren Fixieren der beiden Oberflächen verwendet wird,
- Einbetten der Kugelsegmente (3) mit deren Kalotten (32) in die Ausnehmungen (2) des Grundkörpers (1),
- Ausrichten der unterschiedlichen Spiegelflächen (31) mittels einer Masterschablone (7), die die gewünschten Ausrichtungen der optischen Achsen (51) **durch** Ausrichtflächen (72) für die Spiegelflächen (31) beinhaltet, und
- Fixieren der verspiegelten Kugelsegmente (3) im Bereich der Kontaktpunkte (36) zwischen Kalotte (32) des Kugelsegments (3) und Mantelfläche (25) der Ausnehmung (2) **durch** starres Verbinden mittels der Verbindungsschicht (38).

31. Verfahren nach Anspruch 30, **dadurch gekennzeichnet, dass**
die Ausnehmungen (2) durch Senkbohrungen kegelförmig in den Grundkörper (1) eingebracht werden und die Kugelsegmente (3) entlang einer Kreislinie (37) von Kontaktpunkten (36) an der Mantelfläche (25) der kegelförmigen Ausnehmung (23) fixiert werden.

32. Verfahren nach Anspruch 30, **dadurch gekennzeichnet, dass**
die Ausnehmungen (2) durch zylindrische Bohrungen mit einem Durchmesser, der kleiner als die Kreisfläche des Kugelsegments (3) ist, in den Grundkörper (1) eingebracht werden und die Kugelsegmente (3) entlang einer Kreislinie (37) von Kontaktpunkten (36) am oberen Rand der Mantelfläche (25) der zylindrischen Ausnehmung (21) fixiert werden.

33. Verfahren nach Anspruch 30, **dadurch gekennzeichnet, dass**
die Ausnehmungen (2) bereits bei der Herstellung des Grundkörpers (1) durch Abformung von dreiseitigen Pyramiden (22) eingebracht werden und die Kugelsegmente (3) mit ihrer Kalotte (32) an jeweils einem Kontaktpunkt (36) auf jeder Mantelfläche (25) der Pyramide (22) fixiert werden.

34. Verfahren nach Anspruch 30, **dadurch gekennzeichnet, dass**
zur Fixierung des Kugelsegments (3) in der Ausnehmung (2) mindestens an den Kontaktpunkten (36) auf einer der Oberflächen von Kugelkalotte (32) oder Mantelfläche (25) der Ausnehmung (2) ein Kleber aufgetragen wird.

35. Verfahren nach Anspruch 34, **dadurch gekennzeichnet, dass**
auf einer der Oberflächen von Kugelkalotte (32) oder Mantelfläche (25) der Ausnehmung (2) ein durch Energieeintrag aushärtbarer Kleber aufgetragen wird.

36. Verfahren nach Anspruch 35, **dadurch gekennzeichnet, dass**
der aushärtbarer Kleber von der Unterseite der Kugelsegmente (3) durch einen im Grundkörper (1) zentral angeordneten Zugang (17) zu den Ausnehmungen (2) mittels einer UV-Lichtquelle ausgehärtet wird.

37. Verfahren nach Anspruch 30, **dadurch gekennzeichnet, dass**
mindestens die Kontaktpunkte (36) der Oberflächen von Kugelkalotte (32) und Ausnehmung (2) mit einer durch Energieeintrag schmelzbaren Beschichtung versehen werden.

38. Verfahren nach Anspruch 37, **dadurch gekennzeichnet, dass**
mindestens Bereiche um die Kontaktpunkte (36) der Oberflächen von Kugelkalotte (32) und Ausnehmung (2) mit einer metallischen Beschichtung versehen werden, wobei die metallischen Beschichtungen beider Oberflächen durch Laserlöten miteinander verschmolzen werden.

39. Verfahren nach Anspruch 30, **dadurch gekennzeichnet, dass**
durch Andrücken der Masterschablone (7) zum Ausrichten der Spiegelflächen (31) höchstens drei Ausrichtflächen (72) gleichzeitig in Kontakt mit den vorgesehenen Spiegelflächen (31) gebracht werden, bevor die so ausgerichteten Spiegelflächen (31) mittels der zwischen den zugeordneten Oberflächen von Kugelkalotte (32) und Ausnehmung (2) eingebrachten Verbindungsschicht (38) gezielt zur starren Verbindung der Kontaktpunkte (36) veranlasst werden.

40. Verfahren nach Anspruch 39, **dadurch gekennzeichnet, dass**
beim Ausrichten von mehr als drei Spiegelflächen (31) zueinander nach dem Fixieren von drei Spiegelflächen (31) jede weitere Spiegelfläche (31) durch die Einbeziehung von jeweils zwei bereits fixierten Spiegelflächen (31) justiert und anschließend fixiert wird.

## Claims

1. Arrangement for generating a plurality of optical axes having a defined alignment relative to each other, wherein the optical axes are defined by the angles of emergence of a light bundle at differently arranged planar mirror surfaces, **characterised in that**
- the planar mirror surfaces (31) are provided on the intersection of spherical segments (3), each spherical segment (3) always containing a calotte (32) and a circular surface, and the extended axis of symmetry (33) of the spherical segment (3) beyond the circular surface representing a mirror surface normal (34);
- each spherical segment (3) and its calotte (32) are embedded in a recess (2) of a base body (1), said recess (2) comprising a central axis, which is substantially adapted to that direction of the mirror surface normal (34) which is required for alignment of the optical axis (51), as well as a peripheral surface (25), and contact points (36) are present between the calotte (32) of the spherical segment (3) and the peripheral surface (25), said contact points (36) representing an unchangeable figure of contact points (36) which is independent from the orientation of the mirror surface (31), and
- the spherical segments (3) are rigidly fixed in the recesses (2) of the base body (1) by a connecting layer (38) at least at the contact points (36), with the planar mirror surfaces (31) being adjustable, prior to final fixation of the connecting layer (38), with whatever precision according to the optical axes (51) to be aligned.

2. Arrangement according to claim 1, **characterised in that** each spherical segment (31) is holohedrally provided with a mirror coating on its planar intersection.

3. Arrangement according to claim 1, **characterised in that** the intersection is coated with a mirror coating, with a sharply delimited marginal area being provided as a stop for delimiting the reflected light bundle (5).

4. Arrangement according to claim 2 or 3, **characterised in that** the intersection is vapour-coated with a mirror coating.

5. Arrangement according to claim 1, **characterised in that** the spherical segments (3) are hemispheres.

6. Arrangement according to claim 1, **characterised in that** the recesses (2) are conical, the unchangeable figure of the contact points (36) between the peripheral surface (25) of the conical recess (23) and the calotte (32) of an embedded spherical segment (3) being a circle line (37).

7. Arrangement according to claim 1, **characterised in that** the recesses are pyramid-shaped, with the unchangeable figure of the contact points (36) being corner points of a planar, n-sided polygon, which are respectively located on a directrix of the lateral surfaces of the pyramid-shaped recess (22).

8. Arrangement according to claim 7, **characterised in that** the recesses (2) are trilateral, pyramid-shaped recesses (22), with the contact points (36) being corner points of a triangle, which are located on a directrix of the three lateral surfaces of the pyramid-shaped recess (22).

9. Arrangement according to claim 1, **characterised in that** the base body (1) comprises, for each optical axis (51) to be aligned, a surface portion for forming a said recess (2) therein, with the surface normal of said surface portion in the region of the recess (2) being substantially adapted to that direction of the mirror surface normal (34) which is required for alignment of the optical axis (51).

10. Arrangement according to claim 9, **characterised in that** the base body (1) for generating a plurality of ray bundles (5) within a plane which is orthogonal to the direction of the incident light bundle (4) is a cone (12), in whose peripheral surface (15) the conical recesses (23) are arranged in a randomly distributed manner.

11. Arrangement according to claim 9, **characterised in that** the base body (1) for alignment of a plurality of ray bundles (5) in different optical axes (51) comprises planar surfaces, said planar surfaces being adapted, in their position relative to an incident light bundle (4), such that they are arranged substantially parallel to the mirror surfaces (31) to be subsequently adjusted.

12. Arrangement according to claim 11, **characterised in that** the base body (1) for alignment of a plurality of ray bundles (5) within a plane that is orthogonal to the direction of the incident light bundle (4) is an n-sided pyramid (11), wherein n is the number of the ray bundles (5) whose optical axes (51) are to be aligned in a plane.

13. Arrangement according to claim 12, **characterised in that** the base body (1) for generating four orthogonal ray bundles (5) which are orthogonal to the direction of the incident light bundle (4) and to each other is a straight, square pyramid (11).

14. Arrangement according to any one of claims 11 to 13, **characterised in that** the recesses (2) are cylindrical, with the cylindrical recess (21) having a smaller diameter than the diameter of the associated spherical segment (3), so that the unchangeable figure of the contact points (36) is a circle at the upper edge of the cylindrical recess (21).

15. Arrangement according to claim 10, 12 or 13, **characterised in that**, for simultaneous illumination of all mirror surfaces (31) located on the peripheral surface (15) of the base body (1), there is provided a light source which has a collimated light bundle extending symmetrically along the axis of symmetry of the base body (1), wherein the light source is arranged above the tip of the base body (1).

16. Arrangement according to claim 10, 12 or 13, **characterised in that**, for simultaneous illumination of all mirror surfaces (31) located on the peripheral surface (15) of the base body (1), a light source is provided below the peripheral surface (15), wherein the base body (1) comprises a central symmetrical breakthrough (13), through which the ray bundle of the light source (61) is guided, and a collimator (63) is arranged above the tip of the base body (1), said collimator (63) reflecting the ray bundle incident from the light source (61) onto the mirror surfaces (31) in a collimated manner.

17. Arrangement according to claim 16, **characterised in that** the collimator (63) is a collimator objective which is provided for collimation of incident light both in transmission and in reflection.

18. Arrangement according to claim 17, **characterised in that** the collimator objective (63) has a mirror coating (64) on a lens surface, said mirror coating (64) having a window, in the region of the optical axis of the collimator objective (63), for transmitting a delimited light bundle.

19. Arrangement according to claim 18, **characterised in that** the window (65) comprises a circular aperture for the transmitted light bundle.

20. Arrangement according to claim 18, **characterised in that** the window (65) comprises a square aperture for the transmitted light bundle.

21. Arrangement according to claim 16, **characterised in that**, inside the base body (1), in the region of its base (16), the central symmetrical breakthrough (13) is expanded to a larger cylindrical counterbore (18) with a conical end to accommodate a light source (61), wherein the light source, which is embedded in a spherical holder (62) for adjustment of the emission characteristic, is rotatably supported in said counterbore (18).

22. Arrangement according to claim 10, **characterised in that** the base body (1) is a truncated pyramid, wherein a breakthrough (13) is present between the top surface (14) and the base (16) so as to allow unobstructed transmission of a central fraction of a light bundle incident from a light source (61).

23. Arrangement according to claim 12 or 13, **characterised in that** the base body (1) is a truncated pyramid, wherein a central breakthrough (13) is present between the top surface (14) and the base (16) so as to allow unobstructed transmission of a central fraction of the light bundle incident from a light source (61).

24. Arrangement according to claim 1, **characterised in that** the base body (1) is composed of two congruent partial bodies (19) having planar bases (16), wherein
- the partial bodies (19) are arranged along a common central axis, comprise a peripheral surface (15), which is inclined relative to the base (16), said peripheral surface (15) being provided for forming three recesses (2) for the mirror-coated spherical segments (3), said recesses (2) being regularly distributed about the central axis of the respective partial body (19);
- the bases (16) of the partial bodies (19) are connected to each other, located opposite each other in parallel, such that the central axes (24) of two each of the recesses (2) located in different partial bodies (19) are arranged along the same rectilinear line and the optical axes (51) of the reflected light bundles (5) of all mirror-coated spherical segments (3) have a common virtual point of intersection (S), and
- the mirror-coated spherical segments (3) for each partial body (19) are respectively illuminated by a light source (81; 82) which comprises a light bundle (4) along the common central axis of the partial bodies (19), said light bundle (4) being incident in a collimated condition.

25. Arrangement according to claim 24, **characterised in that** the base body (1) consists of two rotationally symmetrical partial bodies (19) having planar bases (16).

26. Arrangement according to claim 25, **characterised in that** the base body (1) consists of two cones (12).

27. Arrangement according to claim 25, **characterised in that** the base body (1) consists of two spherical segments.

28. Arrangement according to claim 24, **characterised in that** the base body (1) consists of two trilateral pyramids (11), wherein the parallel bases (16) of the pyramids (11) are rotated 60° relative to each other about the common central axis of the partial bodies (19).

29. Arrangement according to any one of claims 24 to 27, **characterised in that** a housing in the shape of a cube (8) is arranged around the base body (1), wherein the base body (1) has its central axis positioned along a space diagonal (83) of the cube (8) and point-symmetrically with respect to the centre of the cube (8), and two collimated, oppositely arranged light sources (81; 82) are provided along said space diagonal (83) in order to illuminate the mirror surfaces (31) of one partial body (19) each of the base body (1), said mirror surfaces (31) of each partial body (19) being directed such that each optical axis (51) of the light bundles (5) reflected by the mirror surfaces (31) of a partial body (19) orthogonally traverses a cube surface (84) which is adjacent to the associated light source (81; 82).

30. Method of generating a plurality of optical axes having a defined orientation relative to each other, wherein reflected light bundles are generated from a collimated incident light bundle from a light source by alignment of adjustable planar mirror surfaces, wherein the direction of the optical axes is adjusted by the angle of reflection of the respective mirror surface relative to the incident light bundle, said method being **characterised by** the steps of:
- producing carrier bodies for mirror surfaces (31), wherein spheres are divided into spherical segments (3) by planar cuts so as to form spherical segments (3) which comprise a calotte (32) and a circular surface;
- applying a mirror coating onto the circular surface of the spherical segments (3), wherein the axis of symmetry (33) of the spherical segment (3) above the mirror surface (31) is the mirror surface normal (34) with respect to the optical axis (51) to be aligned;
- producing a base body (1), wherein, for each optical axis (51) to be aligned, a recess (2) comprising a central axis (24) and a peripheral surface (25) is formed in the surface of the base body (1) so that the central axis (24) of the recess (2) is adapted at least approximately to the direction of the mirror surface normal (34), which direction is required for alignment of the optical axis (51), and wherein the shape of the recesses (2) is selected such that it respectively supports the spherical segment (3) in an manner not allowing displacement, but allowing rotation about the centre of curvature (35) of the calotte (32);
- applying a connecting layer (38) to at least one of the surfaces of the calotte (32) and of the recess (2), wherein the connecting layer (38) is used for subsequent rigid fixation of said two surfaces;
- embedding the spherical segments (3) with their calottes (32) in the recesses (2) of the base body (1);
- aligning the different mirror surfaces (31) by means of a master template (7), which includes the desired alignments of the optical axes (51) by alignment surfaces (72) for the mirror surfaces (31), and
- fixing the mirror-coated spherical segments (3) in the region of the contact points (36) between the calotte (32) of the spherical segment (3) and the peripheral surface (25) of the recess (2) by rigid connection by means of the connecting layer (38).

31. Method according to claim 30, **characterised in that** the recesses (2) are conically formed in the base body (1) by counterbores, and the spherical segments (3) are fixed along a circle line (37) of contact points (36) at the peripheral surface (25) of the conical recess (23).

32. Method according to claim 30, **characterised in that** the recesses (2) are formed in the base body (1) by cylindrical bores having a diameter which is smaller than the circular surface of the spherical segment (3), and the spherical segments (3) are fixed along a circle line (37) of contact points (36) at the upper edge of the peripheral surface (25) of the cylindrical recess (21).

33. Method according to claim 30, **characterised in that** the recesses (2) are formed already during production of the base body (1) by modelling on trilateral pyramids (22), and the spherical segments (3) with their calotte (32) are fixed at one contact point (36) each on each peripheral surface (25) of the pyramid (22).

34. Method according to claim 30, **characterised in that**, in order to fix the spherical segment (3) in the recess (2), an adhesive is applied at least at the contact points (36) on one of the surfaces of spherical calotte (32) or peripheral surface (25) of the recess (2).

35. Method according to claim 34, **characterised in that** an adhesive which is curable by input of energy is applied to one of the surfaces of spherical calotte (32) or peripheral surface (25) of the recess (2).

36. Method according to claim 35, **characterised in that** the curable adhesive is cured by means of a UV light source from the bottom surface of the spherical segments (3) through an access (17) to the recesses (2), which access is centrally arranged in the base body (1).

37. Method according to claim 30, **characterised in that** at least the contact points (36) of the surfaces of the spherical calotte (32) and of the recess (2) are provided with a coating which is fusible by input of energy.

38. Method according to claim 37, **characterised in that** at least regions around the contact points (36) of the surfaces of spherical calotte (32) and recess (2) are provided with a metallic coating, wherein the metallic coatings of both surfaces are fused with each other by laser soldering.

39. Method according to claim 30, **characterised in that** by pressing-on the master template (7) in order to align the mirror surfaces (31), a maximum of three alignment surfaces (72) are simultaneously made to contact the provided mirror surfaces (31), before the mirror surfaces (31) aligned in this manner are selectively caused to rigidly connect the contact points (36) by means of the connecting layer (38) formed between the associated surfaces of spherical calotte (32) and recess (2).

40. Method according to claim 39, **characterised in that**, when aligning more than three mirror surfaces (31) relative to each other after fixation of three mirror surfaces (31), each further mirror surface (31) is adjusted by respective reference to two already fixed mirror surfaces (31) and is then fixed.

## Revendications

1. Système destiné à produire plusieurs axes optiques orientés de façon définie les uns par rapport aux autres, dans lequel les axes optiques sont définis par l'angle de réflexion d'un faisceau lumineux sur des surfaces de miroir planes disposées de façon différente, **caractérisé en ce que**
- les surfaces de miroir planes (31) sont appliquées sur la surface de coupe de segments sphériques (3), chaque segment sphérique (3) contenant constamment une calotte sphérique (32) et une surface circulaire et l'axe de symétrie prolongé (33) du segment sphérique (3) prolongé au-delà de la surface circulaire représentant une normale à la surface de miroir (34),
- chaque segment sphérique (3) est encastré avec sa calotte sphérique (32) dans un évidement (2) d'un corps de base (1), l'évidement (2) comprenant un axe central, qui est adapté sensiblement à la direction de la normale à la surface de miroir (34) nécessaire pour orienter l'axe optique (51), ainsi qu'une surface enveloppe (25), et des points de contact (36), qui représentent une figure des points de contact (36) constante et indépendante de l'orientation de la surface de miroir (31), sont présents entre la calotte sphérique (32) du segment sphérique (3) et la surface enveloppe (25) de l'évidement (2), et
- les segments sphériques (3) sont fixés rigidement dans les évidements (2) du corps de base (1) au moins sur les points de contact (36) par une couche de liaison (38), les surfaces de miroir planes (31) pouvant être alignées avec une précision quelconque avant la fixation finale de la couche de liaison (38) en fonction des axes optiques (51) destinés à être orientés.

2. Système selon la revendication 1, **caractérisé en ce que**
chaque segment sphérique (31) est pourvu sur son plan de section plat, sur toute la surface, d'une couche réfléchissante.

3. Système selon la revendication 1, **caractérisé en ce que**
le plan de section est revêtu d'une couche réfléchissante, une zone latérale délimitée de façon tranchante étant prévue comme écran pour délimiter le faisceau lumineux (5) réfléchi.

4. Système selon la revendication 2 ou 3, **caractérisé en ce que** le plan de section est métallisé avec une couche réfléchissante.

5. Système selon la revendication 1, **caractérisé en ce que**
les segments sphériques (3) sont des hémisphères.

6. Système selon la revendication 1, **caractérisé en ce que**
les évidements (2) sont coniques, la figure constante des points de contact (36) entre la surface enveloppe (25) de l'évidement conique (23) et la calotte sphérique (32) d'un segment sphérique (3) encastré étant un cercle (37).

7. Système selon la revendication 1, **caractérisé en ce que**
les évidements sont pyramidaux, la figure constante des points de contact (36) étant les points d'angle d'une forme à n angles, qui se situent respectivement sur une génératrice des surfaces latérales de l'évidement pyramidal (22).

8. Système selon la revendication 7, **caractérisé en ce que**
les évidements (2) sont des évidements pyramidaux triangulaires (22), les points de contact (36) étant les points d'angle d'un triangle, qui sont disposés sur une génératrice des trois surfaces latérales de l'évidement pyramidal (22).

9. Système selon la revendication 1, **caractérisé en ce que**
le corps de base (1) comprend pour chaque axe optique (51) destiné à être orienté une partie de surface destinée à introduire un dit évidement (2), la normale à la surface de la partie de surface dans la zone de l'évidement (2) étant adaptée sensiblement à la direction de la normale à la surface de miroir (34) nécessaire pour orienter l'axe optique (34).

10. Système selon la revendication 9, **caractérisé en ce que**
le corps de base (1) destiné à produire plusieurs faisceaux de rayons (5) à l'intérieur d'un plan, qui est orthogonal à la direction du faisceau lumineux incident (4), est une sphère (12), dans la surface enveloppe de laquelle les évidements coniques (23) sont disposés en étant répartis de façon quelconque.

11. Système selon la revendication 9, **caractérisé en ce que**
le corps de base (1) destiné à orienter plusieurs faisceaux de rayons (5) dans différents axes optiques (51) comprend des surfaces planes, la position des surfaces planes par rapport à un faisceau lumineux incident (4) étant adaptée de sorte que les surfaces planes sont disposées sensiblement parallèlement aux surfaces de miroir (31) destinées à être orientées par la suite.

12. Système selon la revendication 11, **caractérisé en ce que**
le corps de base (1) destiné à orienter plusieurs faisceaux de rayons (5) à l'intérieur d'un plan, qui est orthogonal à la direction du faisceau lumineux incident (4), est une pyramide à n faces (11), n étant le nombre de faisceaux de rayons (5) dont les axes optiques (51) sont destinés à être orientés dans un plan.

13. Système selon la revendication 12, **caractérisé en ce que**
le corps de base (1) destiné à produire quatre faisceaux de rayons orthogonaux (5), qui sont orthogonaux à la direction du faisceau lumineux incident (4) et les uns aux autres, est une pyramide quadratique droite (11).

14. Système selon l'une quelconque des revendications 11 à 13, **caractérisé en ce que**
les évidements (2) sont cylindriques, l'évidement cylindrique (21) présentant un diamètre inférieur au diamètre du segment sphérique (3) associé, de sorte que la figure constante des points de contact (36) est un cercle sur le bord supérieur de l'évidement cylindrique (21).

15. Système selon la revendication 10, 12 ou 13, **caractérisé en ce que**, pour éclairer simultanément toutes les surfaces de miroir (31) situées sur la surface enveloppe (15) du corps de base (1), il est prévu une source de lumière qui comprend un faisceau lumineux collimaté s'étendant de façon symétrique le long de l'axe de symétrie du corps de base (1), la source de lumière étant aménagée au-dessus de la pointe du corps de base (1).

16. Système selon la revendication 10, 12 ou 13, **caractérisé en ce que**
pour éclairer simultanément toutes les surfaces de miroir (31) situées sur la surface enveloppe (15) du corps de base (1), il est prévu une source de lumière au-dessous de la surface enveloppe (15), le corps de base (1) comprenant un passage (13) symétrique central, à travers lequel est acheminé le faisceau de rayons de la source de lumière (61), et un collimateur (63), qui réfléchit le faisceau de rayons incident depuis la source de lumière (61) de façon collimatée sur les surfaces de miroir (31), est disposé au-dessus de la pointe du corps de base (1).

17. Système selon la revendication 16, **caractérisé en ce que**
le collimateur (63) est un objectif de collimateur, qui est prévu aussi bien en transmission qu'en réflexion pour la collimation de la lumière incidente.

18. Système selon la revendication 17, **caractérisé en ce que**
l'objectif de collimateur (63) comprend une surface de miroir (64) sur une surface de lentille, la surface de miroir (64) comprenant dans la zone de l'axe optique de l'objectif de collimateur (63) une fenêtre destinée à transmettre un faisceau lumineux délimité.

19. Système selon la revendication 18, **caractérisé en ce que**
la fenêtre (65) comprend une ouverture circulaire pour le faisceau lumineux transmis.

20. Système selon la revendication 18, **caractérisé en ce que**
la fenêtre (65) comprend une ouverture quadratique pour le faisceau lumineux transmis.

21. Système selon la revendication 16, **caractérisé en ce que**
le passage symétrique central (13), à l'intérieur du corps de base (1) dans la zone de sa surface de base (16), est élargi pour former un alésage conique (18) cylindrique plus grand doté d'une extrémité conique destinée à recevoir une source de lumière (61), la source de lumière, qui est encastrée dans une fixation sphérique (62) pour orienter la caractéristique de rayonnement, étant montée de manière rotative dans cet alésage conique (18).

22. Système selon la revendication 10, **caractérisé en ce que**
le corps de base (1) est un cône tronqué, un passage (13), destiné à laisser passer librement une part centrale du faisceau lumineux incident depuis une source de lumière (61), étant présent entre la surface de couverture (14) et la surface de base (16).

23. Système selon la revendication 12 ou 13, **caractérisé en ce que**
le corps de base (1) est une pyramide tronquée, un passage central (13), destiné à laisser passer librement une part centrale du faisceau lumineux incident depuis une source de lumière (61), étant présent entre la surface de couverture (14) et la surface de base (16).

24. Système selon la revendication 1, **caractérisé en ce que**
le corps de base (1) est composé de deux corps partiels (19) congruents dotés de surfaces de base planes (16),
- les corps partiels (19) étant disposés le long d'un axe central commun, comprenant respectivement une surface enveloppe (15) inclinée par rapport à la surface de base (16), laquelle surface enveloppe est prévue pour introduire trois évidements (2) répartis régulièrement autour de l'axe central du corps partiel (19) respectif pour les segments sphériques (3) métallisés par vaporisation d'aluminium,
- les surfaces de base (16) des corps partiels (19) étant reliées les unes aux autres en étant parallèlement opposées, de sorte que les axes centraux (24) de respectivement deux évidements (2) placés dans différents corps partiels (19) sont disposés le long d'une seule et même droite et les axes optiques (51) des faisceaux lumineux (5) réfléchis de tous les segments sphériques (3) métallisés par vaporisation d'aluminium présentent un point d'intersection (S) virtuel commun, et
- les segments sphériques (3) métallisés par vaporisation d'aluminium de chaque corps partiel (19) sont éclairés par respectivement une source de lumière (81 ; 82), qui comprend un faisceau lumineux (4) incident de façon collimatée le long de l'axe central commun des corps partiels (19).

25. Système selon la revendication 24, **caractérisé en ce que**
le corps de base (1) est constitué de deux corps partiels (19) à symétrie de révolution dotés de surfaces de base planes (16).

26. Système selon la revendication 25, **caractérisé en ce que**
le corps de base (1) est constitué de deux sphères (12).

27. Système selon la revendication 25, **caractérisé en ce que**
le corps de base (1) est constitué de deux segments sphériques.

28. Système selon la revendication 24, **caractérisé en ce que**
le corps de base est constitué de deux pyramides triangulaires (11), les surfaces de base parallèles (16) des pyramides (11) étant amenés en rotation sur 60° les unes par rapport aux autres autour de l'axe central commun des corps partiels (19).

29. Système selon l'une quelconque des revendications 24 à 27,
**caractérisé en ce que**
un boîtier sous forme de cube (8) est disposé autour du corps de base (1), le corps de base (1) étant positionné avec son axe central le long d'une diagonale dans l'espace (83) du cube (8) et à symétrie ponctuelle par rapport au point central du cube (8) et deux sources de lumière (81 ; 82) collimatées et opposées, destinées à éclairer les surfaces de miroir (31) de respectivement un corps partiel (19) du corps de base (1), étant prévues le long de ladite diagonale dans l'espace (83), les surfaces de miroir (31) de chaque corps partiel (19) étant orientées de sorte que chaque axe optique (51) des faisceaux lumineux (5) réfléchis par les surfaces de miroir (31) d'un corps partiel (19) traverse de façon orthogonale une surface de cube (84) voisine de la source de lumière (81 ; 82) associée.

30. Procédé destiné à produire plusieurs axes optiques orientés de façon définie les uns par rapport aux autres, dans lequel des faisceaux lumineux réfléchis depuis un faisceau lumineux incident de façon collimatée sont produits par l'orientation de surfaces de miroir planes réglables, la direction des axes optiques étant réglée par l'angle de réflexion de la surface de miroir respective par rapport au faisceau lumineux incident, **caractérisé par** les étapes suivantes :
- fabrication de corps de support pour surfaces de miroir (31), les sphères étant divisées par des coupes planes dans les segments sphériques (3), de sorte que cela engendre des segments sphériques (3) dotés d'une calotte sphérique (32) et d'une surface circulaire,
- application d'une couche réfléchissante sur la surface circulaire des segments sphériques (3), l'axe de symétrie (33) du segment sphérique (3) au-dessus de la surface de miroir (31) étant la normale à la surface de miroir (34) par rapport à l'axe optique (51) destiné à être orienté,
- fabrication d'un corps de base (1), un évidement (2) doté d'un axe central (24) et d'une surface enveloppe (25) étant introduit pour chaque axe optique (51) destiné à être orienté dans la surface du corps de base (1), de sorte que l'axe central (24) de l'évidement (2) est adapté au moins approximativement à la direction de la normale à la surface de miroir (34) nécessaire pour orienter l'axe optique (51), et la forme des évidements (2) étant sélectionnée de sorte qu'elle loge respectivement le segment sphérique (3) stationnaire mais tournant autour du centre de courbure (35) de la calotte sphérique (32),
- application d'une couche de liaison (38) sur au moins une des surfaces de la calotte sphérique (32) et de l'évidement (2), la couche de liaison (38) étant utilisée pour la fixation rigide ultérieure des deux surfaces,
- encastrement des segments sphériques (3) avec leurs calottes sphériques (32) dans les évidements (2) du corps de base (1),
- alignement des différentes surfaces de miroir (31) au moyen d'un gabarit maître (7), qui contient les orientations souhaitées des axes optiques (51) à travers les surfaces de départ (72) pour les surfaces de miroir (31), et
- fixation des segments sphériques (3) métallisés par vaporisation d'aluminium dans la zone des points de contact (36) entre la calotte sphérique (32) du segment sphérique (3) et la surface enveloppe (25) de l'évidement (2) par une liaison rigide au moyen de la couche de liaison (38).

31. Procédé selon la revendication 30, **caractérisé en ce que**
les évidements (2) sont introduits à travers les alésages coniques dans le corps de base (1) et les segments sphériques (3) sont fixés le long d'un cercle (37) par les points de contact (36) sur la surface enveloppe(25) de l'évidement conique (23).

32. Procédé selon la revendication 30, **caractérisé en ce que**
les évidements (2) sont introduits dans le corps de base (1) à travers les alésages cylindriques présentant un diamètre qui est inférieur à la surface circulaire du segment sphérique (3), et les segments sphériques (3) sont fixés le long d'un cercle (37) par les points de contact (36) sur le bord supérieur de la surface enveloppe (25) de l'évidement cylindrique (21).

33. Procédé selon la revendication 30, **caractérisé en ce que**
les évidements (2) sont déjà introduits à l'occasion de la fabrication du corps de base (1) par le moulage de pyramides triangulaires (22) et les segments sphériques (3) sont fixés avec leur calotte sphérique (32) au niveau de chaque point de contact (36) sur chaque surface enveloppe (25) de la pyramide (22).

34. Procédé selon la revendication 30, **caractérisé en ce que**
pour fixer le segment sphérique (3) dans l'évidement (2) au moins au niveau des points de contact (36), une colle est appliquée sur une des surfaces de la calotte sphérique (32) ou de la surface enveloppe (25) de l'évidement (2).

35. Procédé selon la revendication 34, **caractérisé en ce que**
une colle pouvant être durcie par un apport d'énergie est appliquée sur une des surfaces de la calotte sphérique (32) ou la surface enveloppe (25) de l'évidement (2).

36. Procédé selon la revendication 35, **caractérisé en ce que**
la colle pouvant être durcie est durcie de la face inférieure des segments sphériques (3) à travers un accès (17) disposé au centre du corps de base (1) aux évidements (2) au moyen d'une source de lumière UV.

37. Procédé selon la revendication 30, **caractérisé en ce que**
au moins les points de contact (36) des surfaces de la calotte sphérique (32) et de l'évidement (2) sont pourvus d'un revêtement pouvant être fondu par un apport d'énergie.

38. Procédé selon la revendication 37, **caractérisé en ce que**
au moins des zones autour des points de contact (36) des surfaces de la calotte sphérique (32) et de l'évidement (2) sont pourvues d'un revêtement métallique, les revêtements métalliques des deux surfaces étant fondus ensemble par soudure au laser.

39. Procédé selon la revendication 30, **caractérisé en ce que**
par une compression du gabarit maître (7) destiné à orienter les surfaces de miroir (31), au maximum trois surfaces de départ (72) sont amenées simultanément en contact avec les surfaces de miroir (31) prévues, avant que les surfaces de miroir (31) ainsi orientées soient réalisées de façon ciblée, pour la liaison rigide des points de contact (36), au moyen de la couche de liaison (38) introduite entre les surfaces associées de la calotte sphérique (32) et de l'évidement (2).

40. Procédé selon la revendication 39, **caractérisé en ce que**
à l'occasion de l'orientation de plus de trois surfaces de miroir (31) les unes par rapport aux autres après avoir fixé les trois surfaces de miroir (31), chaque autre surface de miroir est alignée et ensuite fixée en incluant respectivement deux surfaces réfléchissantes (31) déjà fixées.
